(19) Europäisches Patentamt
European Patent Office
Office européen des brevets

(11) EP 2 248 781 B1

(12) # EUROPÄISCHE PATENTSCHRIFT

(45) Veröffentlichungstag und Bekanntmachung des Hinweises auf die Patenterteilung:
**21.12.2016 Patentblatt 2016/51**

(21) Anmeldenummer: **10401063.2**

(22) Anmeldetag: **29.04.2010**

(51) Int Cl.:
***C04B 26/32*** *(2006.01)*
***C04B 28/02*** *(2006.01)*
***C04B 40/06*** *(2006.01)*
***C08G 18/28*** *(2006.01)*
***C08G 18/10*** *(2006.01)*
***C08G 65/336*** *(2006.01)*
***C08G 18/71*** *(2006.01)*
***C08G 18/78*** *(2006.01)*
*C04B 111/00 (2006.01)*

(54) **MEHRKOMPONENTEN-KUNSTMÖRTEL AUF BASIS SILANTERMINIERTER HARZE**

MULTIPLE COMPONENT ARTIFICIAL MORTAR ON THE BASIS OF SILANE TERMINATED RESINS

MORTIERS SYNTHÉTIQUES À PLUSIEURS COMPOSANTS À BASE DE RÉSINES TERMINÉES PAR DU SILANE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **04.05.2009 DE 102009019898**

(43) Veröffentlichungstag der Anmeldung:
**10.11.2010 Patentblatt 2010/45**

(73) Patentinhaber: **fischerwerke GmbH & Co. KG**
**72178 Waldachtal (DE)**

(72) Erfinder:
- **Schlenk, Christian**
  **79211 Denzlingen (DE)**
- **Grün, Jürgen**
  **79268 Bözingen (DE)**
- **Vogel, Martin**
  **79286 Glottertal (DE)**

(56) Entgegenhaltungen:
**DE-A1- 10 115 591**
**DE-A1-102004 055 450**
**DE-A1-102006 054 471**
**DE-A1-102007 009 754**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 248 781 B1

## Beschreibung

Die Erfindung betrifft Injektions-Kunstmörtel auf Basis silanterminierter Harze, deren Verwendung für Befestigungszwecke bzw. als chemische Befestigungssysteme und Verfahren zu deren Verwendung bzw. Herstellung sowie entsprechende Kits.

Es sind eine Reihe von ein- und mehrkomponentigen Systemen zur Befestigung von Ankerelementen in Bohrlöchern und dergleichen bekannt, vor allem auf Basis von Epoxiden, Vinylverbindungen, Urethanen, Harnstoffen und dergleichen. Gemeinsam ist den mehrkomponentigen Systemen, dass mehrere, in der Regel zwei, Komponenten kurz vor dem Einbringen in ein (z.B. Bohr-)Loch oder dabei (beispielsweise durch Einbringen mittels Mischvorrichtungen oder aus einer Mehrkammerkartusche mit Statikmischer oder durch Zerstören von Mehrkammerpatronen im Loch) vermischt werden und miteinander zu einem festen Kunstmörtel reagieren, also einen "chemischen Dübel" bilden, mittels dessen ein Ankerelement befestigt werden kann.

Die EP 2 003 155 beschreibt Zwei-Komponenten-Systeme auf Basis silyl-terminierter Polyurethanpolymere, die durch Umsetzung mittels Aminosilanen gewonnen werden, wobei eine Klebewirkung nicht exemplifiziert wird, sondern lediglich eine Beschichtung mit einem "transparent Adhesive" (transparenten Klebemittel) oder ein Harz als Holzreparaturmittel. Die DE 36 36 974 zeigt entsprechende Zusammensetzungen für die Dentaltechnik zum Herstellen von Abformmassen, welche durch Umsetzung von Diolen mit Diisocyanaten und Aminosilanen gewonnen werden.

Das Dokument DE 10 2006 054 471 A1 offenbart die Verwendung eines Mehrkomponenten-Kunstharzsystem zur Befestigung von Verankerungselementen in Löchern, wobei die Komponenten am Einsatzort gemischt und in ein Loch eingebracht werden und ein Verankerungselement in das Loch eingeführt wird und die Mehrkomponentensystemen auf Basis alkoxysilanterminierten Präpolymeren als Harzkomponente und Wasser als Härterkomponente hergestellt werden.

Der Erfindung liegt die Aufgabe zugrunde, neue Zusammensetzungen zu finden, welche für die Verwendung in Mehr-Komponenten-Systemen geeignet sind und für Befestigungszwecke eingesetzt werden können, insbesondere zum Befestigen von Verankerungselementen in Löchern. Außerdem soll es sich um temperaturbeständige und im Brandfalle ein gutes Verhalten zeigende Zusammensetzungen handeln.

Es wurde nun gefunden, dass Mehr-Komponenten-Harze, deren eine Komponente ein Kunstharz auf Basis mindestens eines mindestens eine Si-gebundene hydrolysierbare Gruppe beinhaltenden silanterminierten Kunstharzes beinhaltet, gut geeignet sind zur Verwendung in der chemischen Befestigungstechnik und aufgrund der hohen Temperaturstabilität und des guten Brandverhaltens von Siliconen zu besonders temperaturbeständigen und im Brandfalle gutes Verhalten zeigenden Befestigungen führen können, der durch das Verhältnis von anorganischen (Si) und organischen Gruppen gesteuert werden kann, wobei das Verhältnis von anorganischen zu organischen Gruppen beispielsweise auch Härte, Flexibilität, Witterungsbeständigkeit, Kontaktfähigkeit zum Substrat und dergleichen mehr eingestellt werden können.

Vor- und nachstehend können spezifische Definitionen der Bedeutungen von allgemeineren Ausdrücken oder Symbolen einzelne, mehrere oder alle der jeweils für Ausführungsformen der Erfindung gegebenen Merkmale ersetzen, was zu bevorzugten Ausführungsformen der Erfindung führt.

Die Erfindung betrifft daher in einer ersten Ausführungsform die Verwendung eines Injektions-Kunstmörtels zur Befestigung von Verankerungselementen in Löchern, wobei der Injektions-Kunstmörtel mindestens eine Komponente a) auf Basis mindestens eines mindestens eine Si-gebundene hydrolysierbare Gruppe beinhaltenden silanterminierten Kunstharzes sowie optional (im Falle eines Mehrkomponenten-Injektions-Kunstmörtels) eine Komponente b) mit einem wasserbasierten Härter (und gegebenenfalls weitere Zusätze) umfasst, vorzugsweise beide Komponenten a) und b), wobei insbesondere im Falle des Vorliegens beider (oder weiterer) Komponenten die Komponenten am Einsatzort gemischt und gleichzeitig und/oder anschließend in ein Loch eingebracht werden, wobei gleichzeitig oder anschließend ein Verankerungselement in das Loch eingeführt wird, wobei der Injektions-Kunstmörtel frei von fein verteilten Gasen entlüftet ist derart, dass das Volumen darin gelöster Gase bei Raumtemperaturen und Normaldruck bei weniger als 0,5 Vol.-% liegt, und dass es sich bei den in der mindestens einen Komponente a) vorhandenen mindestens eine Si-gebundene hydrolysierbare Gruppe beinhaltenden silanterminierten Kunstharzen um solche handelt, die (i) durch Umsetzung organischer Polyamine mit ein oder mehrere Epoxy- und/oder Isocyanat- und/ oder (Meth)acryl- und/oder Anhydrido-Gruppen beinhaltenden und mindestens eine Si-gebundene hydrolysierbare Gruppe beinhaltenden Silanen; (ii) durch Umsetzung mono- oder höherfunktionaler hydroxygruppenhaltiger Harze oder Polyole mit ein oder mehrere Epoxy- und/oder Isocyanat- und/ oder Anhydrido-Gruppen beinhaltenden und mindestens eine Si-gebundene hydrolysierbare Gruppe beinhaltenden Silanen; (iii) durch Umsetzung vinylgruppenhaltiger Harze mit ein oder mehrere Amino- und/oder Thiol-Gruppen beinhaltenden und mindestens eine Si-gebundene hydrolysierbare Gruppe beinhaltenden Silanen; (iv) durch Umsetzung anhydridgruppenhaltiger Verbindungen mit ein oder mehrere Aminogruppen oder Isocyanatogruppen und mindestens eine Si-gebundene hydrolysierbare Gruppe beinhaltenden Silanen; (v) durch Umsetzung von mindestens teilweise durch Reaktion untereinander als Biuret-, Allophanat-, Uretdion-, Isocyanurat-, Iminooxadiazindion- und/oder Uretonimin-Gruppen vorliegende Isocyanatreste tragenden Harzen mit Silanen, die als Substituenten

mindestens eine Si-gebundene hydrolysierbare Gruppe und mindestens eine Isocyanatgruppen gegenüber reaktive Gruppe ausgewählt aus aus Amino, sek. Amino, Mercapto, Epoxy-, Isocyanato- und/oder Anhydrido-Gruppe insbesondere eine Aminogruppe, aufweisen; (vi) oder durch Verwendung der Produkte von zwei oder mehr der vorgenannten Umsetzungen erhältlich sind.

Vorzugsweise handelt es sich bei dem Injektions-Kunstmörtel um einen Mehr-Komponenten-Kunstmörtel, insbesondere um einen Zwei-Komponenten-Kunstmörtel, jeweils als Injektionsmörtel ausgeführt.

Bei allen Ausführungsformen der Erfindung sind solche bevorzugt, bei denen mindestens eine Komponente silanfrei ist, insbesondere Silane nur in einer Komponente vorhanden sind, wobei vorzugsweise eine silanhaltige Komponente a) vorhanden sein kann und eine silanfreie Komponente b) wie ansonsten vor- und nachstehend definiert.

Der Injektions-Kunstmörtel ist frei von fein verteilten Gasen entlüftet, beispielsweise unter Unterdruck entlüftet, derart, dass das Volumen darin gelöster Gase bei Raumtemperatur und Normaldruck bei weniger als 0,5 Vol.-%, wie weniger als 0,1 Vol-%, liegt.

Es handelt sich bei den mindestens eine Si-gebundene hydrolysierbare Gruppe beinhaltenden silanterminierten Kunstharzen um solche, die

(i) durch Umsetzung organischer Polyamine mit ein oder mehrere (vorzugsweise eine) Epoxy- und/oder Isocyanatgruppen und/oder (ferner) (Meth)acrylatgruppen und/oder (ferner) Anhydridogruppen beinhaltenden und mindestens eine Si-gebundene hydrolysierbare Gruppe beinhaltenden Silanen;
(ii) durch Umsetzung mono- oder höherfunktionaler hydroxygruppenhaltiger Harze oder Polyole mit ein oder mehrere (vorzugsweise eine) Epoxy- und/oder Isocyanatgruppen und/oder (ferner) Anhydridogruppen beinhaltenden und mindestens eine Si-gebundene hydrolysierbare Gruppe beinhaltenden Silanen;
(iii) durch Umsetzung vinylgruppenhaltiger Harze mit ein oder mehrere (vorzugsweise eine) Aminogruppen und/oder (ferner) Thiol-Gruppen beinhaltenden und mindestens eine Si-gebundene hydrolysierbare Gruppe beinhaltenden Silanen;
(iv) durch Umsetzung anhydridgruppenhaltiger Verbindungen mit ein oder mehrere (vorzugsweise eine) Aminogruppen oder (ferner) Isocyanat-Gruppen und mindestens eine Si-gebundene hydrolysierbare Gruppe beinhaltenden Silanen;
(v) durch Umsetzung von mindestens teilweise durch Reaktion untereinander als Biuret-, Allophanat-, Uretdion-, Isocyanurat-, Iminooxadiazindion- und/oder Uretonimin-Gruppen vorliegende Isocyanatreste tragenden Harzen mit Silanen, die als Substituenten mindestens eine Si-gebundene hydrolysierbare Gruppe und mindestens eine Isocyanatgruppen gegenüber reaktive (funktionale) Gruppe ausgewählt aus-$NH_2$ (Amino), -NH- (sek. Amino), -SH (Mercapto), (und ferner aus) Epoxy, Isocyanato und Anhydrido, insbesondere eine Aminogruppe, aufweisen;
(vi) oder durch Verwendung der Produkte von zwei oder mehr der vorgenannten Umsetzungen

erhältlich sind.

Bevorzugt finden ein oder mehrere, nach nur einer der vorstehend beschriebenen oder insbesondere nachstehend präzisierten Varianten (i), (ii), (iii), (iv) oder (v) erhältliche Silane Verwendung, insbesondere ein oder mehrere, nach nur einer der Varianten (i), (iii), (iv) oder (v), vor allem nach Variante (i) oder nach Variante (v), erhältlichen Silane, oder Mischungen davon mit einem der anderen Silane.

Die Erfindung betrifft auch einen Injektions- (insbesondere Mehrkomponenten)-Kunstmörtel auf Basis silanterminierter Harze, wobei der Kunstmörtel mindestens eine Komponente a) auf Basis eines oder mehrerer Si-gebundene hydrolysierbare Gruppe beinhaltenden silanterminierten Kunstharzes ausgewählt aus solchen, die

(A) durch Umsetzung organischer Polyamine mit ein oder mehrere (vorzugsweise eine) Epoxy- und/oder Isocyanatgruppen und/oder (Meth)acrylatgruppen und/oder (ferner) Anhydridogruppen beinhaltenden und mindestens eine Si-gebundene hydrolysierbare Gruppe beinhaltenden Silanen;
(B durch Umsetzung mono- oder höherfunktionaler hydroxygruppenhaltiger Harze oder Polyole mit ein oder mehrere (vorzugsweise eine) Epoxy- und/oder Isocyanatgruppen und/oder (ferner) Anhydridogruppen beinhaltenden und mindestens eine Si-gebundene hydrolysierbare Gruppe beinhaltenden Silanen;
(C) durch Umsetzung vinylgruppenhaltiger Harze mit ein oder mehrere (vorzugsweise eine) Aminogruppen und/oder (ferner) Thiol-Gruppen beinhaltenden und mindestens eine Si-gebundene hydrolysierbare Gruppe beinhaltenden Silanen;
(D) durch Umsetzung anhydridgruppenhaltiger Verbindungen mit ein oder mehrere (vorzugsweise eine) Aminogruppen oder Isocyanatogruppen und mindestens eine Si-gebundene hydrolysierbare Gruppe beinhaltenden Silanen;
(E) durch Umsetzung von mindestens teilweise durch Reaktion untereinander als Biuret-, Allophanat-, Uretdion-, Isocyanurat- und/oder Iminooxadiazindion-Gruppen vorliegende Isocyanatreste tragenden Harzen mit Silanen, die als Substituenten mindestens eine Si-gebundene hydrolysierbare Gruppe und mindestens eine mit Isocyanatgruppen reaktive (funktionale) Gruppe ausgewählt aus aus $-NH_2$ (Amino), - NH- (sek. Amino), -SH (Mercapto), (ferner) Epoxy-, Isocyanato- und/oder Anhydrido-Gruppe, insbesondere eine Aminogruppe, aufweisen;
(F) oder durch Verwendung der Produkte von zwei oder mehr der genannten Umsetzungen

erhältlich sind, und mindestens eine Härterkomponente b) beinhaltet.

Bevorzugt sind ein oder mehrere, nach nur einer der vorstehend beschriebenen oder insbesondere nachstehend präzisierten Varianten (A), (B), (C), (D) oder (E) erhältliche Silane, insbesondere ein oder mehrere nach nur einer der Varianten (A), (C), (D) oder (E), insbesondere nur ein oder mehrere nach Variante (A) oder nach Variante (E), erhältliche Silane, oder Mischungen davon mit einem der anderen nach (A), (B), (C), (D) oder (E) erhältlichen Silane.

Die Erfindung betrifft in einer bevorzugten Ausführungsform auch die Verwendung eines solchen erfindungsgemäßen Injektions(insbesondere Mehr-Komponenten)-Kunstmörtels zur Befestigung von Verankerungselementen in Löchern, wobei der Mehr-Komponenten-Kunstmörtel mindestens eine Komponente a) auf Basis mindestens eines mindestens eine Si-gebundene hydrolysierbare Gruppe beinhaltenden silanterminierten Kunstharzes sowie optional (vorzugsweise) eine Komponente b) mit einem wasserbasierten Härter und gegebenenfalls weitere Komponenten umfasst, wobei vorzugsweise im Falle des Vorliegens beider Komponenten die Komponenten am Einsatzort gemischt und gleichzeitig und/oder anschließend in ein Loch eingebracht werden, wobei gleichzeitig oder anschließend ein Verankerungselement in das Loch eingeführt wird.

Die Erfindung betrifft auch Verfahren zur Herstellung von erfindungsgemäßen Injektions (insbesondere Mehr-Komponenten)-Kunstmörteln, insbesondere beinhaltend die Herstellung eines Silans nach einer der unter (i) (entsprechend beim erfindungsgemäßen Produkt als solchem Variante (A)), (ii) (entsprechend beim erfindungsgemäßen Produkt als solchem Variante (B)), (iii) (entsprechend beim erfindungsgemäßen Produkt als solchem Variante (C)), (iv), (v)(entsprechend beim erfindungsgemäßen Produkt als solchem Variante (D)) und/oder (vi) (entsprechend beim erfindungsgemäßen Produkt als solchem Variante (E)) genannten Methoden, insbesondere den unter (i), (iii), (iv) oder (v) genannten Methoden oder vor allem der unter (i) oder der unter (v) genannten Methode, gefolgt von der optionalen Zumischung weiterer Zusätze, sowie bei Mehr-Komponenten-Kunstharzen die Herstellung der Komponente (b) sowie insbesondere zusätzlich die Herstellung entsprechender Mehrkomponenten-Kits durch Abfüllen in geeignete Behältnisse.

Unter einem Injektionsmörtel ist ein Mörtel, der zum Einbringen in Löcher (wie insbesondere Bohrlöcher) vorgesehen und/oder ausgerüstet ist, zu verstehen. Dieser kann in Ein-Komponenten-Ausführung (mit einer Komponente a) wie oben oder nachstehend genannt) ausgeführt sein. Dann erfolgt die Reaktion der mindestens eine an Si gebundene hydrolysierbare Gruppe tragenden Silanprodukte bei und/oder nach dem Einbringen mittels Umgebungsfeuchtigkeit, beispielsweise aus Luft und/oder dem Material, das die Lochwände bildet, oder durch Befeuchten mit Wasser, z.B. durch Besprühen; oder ein Mehrkomponenten-Kunstmörtel, wobei letzterer eine besonders bevorzugte Ausführungsform darstellen kann, da er eine gezieltere und gleichmäßigere Befeuchtung mit Wasser erlaubt..

Unter einem Mehr-Komponenten-Kunstmörtel, der erfindungsgemäß verwendbar ist oder selbst Gegenstand der Erfindung ist, ist vorteilhaft ein System aus zwei oder mehr räumlich derart separierten Komponenten zu verstehen, das so ausgeführt ist, dass eine unbeabsichtigte Mischung der Komponenten nicht möglich ist. Insbesondere Zwei-Komponenten-Kunstharze sind besonders bevorzugt, aber auch mehr Komponenten sind möglich, z.B. unterschiedliche Silanharze kombinierbar und/oder ferner ist die Herstellung von mindestens eine Si-gebundene hydrolysierbare Gruppe beinhaltenden silanterminierten Kunstharzen in situ aus separierten Komponenten möglich); das jeweilige System ist als Injektionsmörtel ausgeführt. Beispielsweise können die Komponenten in separaten oder vorzugsweise miteinander verbundenen Behältnissen aufbewahrt werden, wie in Folienbeuteln, Ampullen oder insbesondere Kartuschen, insbesondere Mehrkammerkartuschen, wie Zwei-Kammer-Kartuschen, wobei Kartuschen besonders vorteilhaft mit einem Statikmischer für Injektionszwecke ausgestattet sind.

Bevorzugter Gegenstand der Erfindung ist auch ein Mehr(insbesondere Zwei)-Komponenten-Kunstmörtel, ausgeführt als Injektionsmörtel, zur Befestigung von Verankerungselementen in Löchern, wobei der Mehr-Komponenten-Kunstmörtel mindestens eine Komponente a) auf Basis mindestens eines mindestens eine Si-gebundene hydrolysierbare Gruppe beinhaltenden silanterminierten Kunstharzes sowie mindestens eine Komponente b) mit einem wasserbasierten Härter umfasst, in Form eines Kits, welches mehrere (insbesondere zwei) unterschiedliche Behältnisse für Komponenten a) und b) umfasst, z.B. als Mehrkammerampulle oder Mehrkammerfolienbeutel oder insbesondere in Form einer Mehr (vor allem Zwei)-Kammer-Kartusche, vorteilhaft mit Statikmischer.

Das bevorzugte Verhältnis der Gewichtsanteile von der oder den Komponenten a) und der oder den Komponenten b), angegeben als "a) zu b)", liegt z.B. "99,99 Gew.-% zu 0,01 Gew.-%", insbesondere "(20 bis 99 Gew.-%) zu (80 bis 1 Gew.-%)", jeweils bezogen auf das Gesamtgewicht aller Komponenten (insbesondere a) und b)).

Bei der erfindungsgemäßen Verwendung eines Injektions-Mehrkomponenten-Kunstharzes erfolgt die Mischung vorzugsweise direkt am Einsatzort, beispielsweise mittels einer Mischvorrichtung oder insbesondere eines Statikmischers. Bei einem Ein-Komponenten-Injektionssystem erfolgt das Einbringen ohne Mischen.

Unter Befestigung ist insbesondere das Befestigen von Verankerungselementen, die beispielsweise zur Verankerung von Platten, Abdeckungen oder dergleichen dienen können, in Löchern, wie insbesondere Bohrlöchern, vor

allem in Bausubstraten, wie Stein, Beton; Holz oder dergleichen, zu verstehen. Verankerungselemente können beispielsweise Bolzen, Schrauben, Stangen oder Nägel oder dergleichen sein, die z.B. jeweils ohne oder mit ein oder mehreren Haken, Ösen, Gewinden und/oder Rastelementen oder dergleichen ausgestattet sein können. Bevorzugt sind Bolzen oder Schrauben. Die Verankerungselemente können als solche oder bereits in Verbindung mit daran zu befestigenden Objekten (wie Platten oder dergleichen) vorliegen bzw. verwendet werden

"Auf Basis" bedeutet, dass die erfindungsgemäßen Injektions-Kunstmörtel neben den genannten Komponenten a) und b) oder auch im Fall einkomponentiger Injektionskunstmörtel auch weitere übliche Inhaltsstoffe (Zusätze oder Zusatzstoffe) beinhalten können, wie beispielsweise Haftvermittler, wie z.B. Aminosilane, Rheologieadditive-, wie Thixotropiermittel, z.B. gefällte oder pyrogene Kieselsäure, Pigmente, Farbstoffe, Hilfsstoffe, wie Dispergierhilfsmittel, Lösemittel wie z.B. Niederalkylketone, z.B. Aceton, oder Toluol, Phthalsäureester oder Paraffine, Stabilisatoren (z.B. gegen Säuren oder Basen, Oxidation, UV-Licht und/oder Licht), Antistatikmittel, Verdickungsmittel, Weichmacher, oder dergleichen Additive oder Zusätze enthalten, oder Gemische von zwei oder mehr davon. Diese weiteren Inhaltsstoffe können beispielsweise in einer Menge von insgesamt bis zu 80, beispielsweise von 0,01 bis 50 Gew.- %, oder beispielsweise zwischen 0,01 und 15 vorliegen, bezogen auf das Gesamtgewicht aller Komponenten (insbesondere a) und gegebenenfalls b)), wobei im Falle von Mehrkomponentensystemen die Komponenten voneinander unterschiedliche Zusätze und/oder voneinander unterschiedliche Mengen von Zusätzen enthalten können oder auch Zusätze nur in einer oder einem Teil der Komponenten vorhanden sein können.

Weitere Silane mit hydrolysierbaren Gruppen können beinhaltet sein, beispielsweise (bezogen auf das Gesamtgewicht aller Silane) bis 80 Gew.-% (ein bevorzugtes erfindungsgemäßes Silan oder Silangemisch nach den Varianten (A), (B), (C), (D), (E) und/oder (F) kann dann 100 bis weniger als 20 Gew.-%, bezogen auf das Gesamtgewicht aller Silane, ausmachen) - dies impliziert beispielsweise Alkoxysilanverbindungen oder Silan-Vernetzer, wie Vinyltrimethoxysilan, z.B. Vinylalkoxysilane, 3-Aminopropyltrialkoxysilane, 3-Glycidyloxypropyltrialkoxysilane, oder Ester der Polykieselsäure (wie z.B. Dynasilan 40, Evonik GmbH, Frankfurt am Main, Deutschland), die ein Steuern des Vernetzungsgrades ermöglichen, sonstige Aminosilane (können auch als Haftvermittler dienen), oder Mischungen von zwei oder mehr davon.

Komponente(n) a) und/oder b), vorzugsweise Komponente a), können darüber vorteilhaft hinaus Katalysatoren enthalten, welche die Hydrolyse der hydrolysierbaren an Si-gebundenen Gruppen bei der Härtung beschleunigen. Als Katalysator können übliche Katalysatoren in dem Fachmann bekannter Menge zugesetzt werden, wie z.B. Blei, Kobalt-, Eisen, Nickel, Zink- oder insbesondere Zinnsalze von Carboxylsäuren, wie Fettsäuren, wie Zinnoctanoat, Zinnaphthenat oder Zinn-Acetat, Zinnalkoxylate oder Dialkylzinn-Dicarboxylate, wie Dibutylzinn-dilaurat, Dibutylzinn-dipalmitat, Dibutylzinn-distearat, Dibutylzinn-diacetat oder Dibutylzinnacetylacetonat, Titansäureester, wie Tetrabutyltitanat oder Tetrapropyltitanat, oder (beispielsweise sekundäre oder tertäre) Amine, wie Ethylamine, Morpholin, N-Methylmorpholin, 2-Ethyl-2-Methylimidazol, 1,8-Diazabicycli(5.4.0)undecen-7, Pyridin, Salze solcher Amine mit organischen Carbonsäuren oder langkettige aliphatische Amine, oder Gemische von zwei oder mehr davon, wobei die Gesamtmenge an Katalysator, beispielsweise bei 0,0001 bis 5 Gew.-% liegen kann, z.B. bei 0,0005 bis 0,5 Gew.-%, bezogen auf das Gesamtgewicht der Komponenten (insbesondere a) und b)).

Ein erfindungsgemäßes oder erfindungsgemäß verwendbares Kunstharz kann vorteilhaft auch im einkomponentigen Falle darüber hinaus Katalysatoren enthalten, welche die Hydrolyse der hydrolysierbaren an Si-gebundenen Gruppen bei der Härtung beschleunigen, wie oben beschrieben, auch in den dort genannten Mengen, wobei die Katalysatoren hier auch mikroverkapselt sein können.

Als weitere Zusätze kommen insbesondere Füllstoffe zum Einsatz, vorzugsweise mineralische oder mineralähnliche Füllstoffe, wie Quarz, Glas, Porzellan, Korund, Keramik, Talkum, Kieselsäure (z.B. pyrogene Kieselsäure), Silikate, Ton, Titandioxid, Kreide, Schwerspat, Feldspat, Basalt, Aluminiumhydroxid, Granit oder Sandstein, polymere Füllstoffe, hydraulisch härtbare Füllstoffe, wie Gips, Branntkalk oder Zement (z.B. Tonerd- oder Portlandzement), Wassergläser, aktive Aluminiumhydroxide, Metalle, wie Aluminium, Ruß, ferner Holz, mineralische oder organische Fasern, oder dergleichen, oder Gemische von zwei oder mehr davon. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform, und die entsprechenden Grundteilchen haben vorzugsweise einen maximalen Durchmesser von 0,00001 bis 10 mm. Füllstoffe liegen vorzugsweise in einer Menge von bis zu 90, insbesondere 3 bis 85, beispielsweise 5 bis 70 Gew.-% vor, bezogen auf das Gesamtgewicht der Komponenten des Kunstharzes (insbesondere a) und b)).

Gegebenenfalls können weitere (insbesondere übliche) Zusätze in einem Anteil von bis zu 10 Gew.-%, beispielsweise von 0,01 bis 8 Gew.-%, bezogen auf das Gesamtgewicht aller Komponenten, beinhaltet sein.

Zusätze, welche zu einer Reaktion der Si-gebundenen hydrolysierbaren Gruppen in Komponente a) bereits beim Lagern führen, sind dabei in dieser Komponente zu vermeiden, wie Wasser, flüssige Wassergläser, primäre oder sekundäre Amine, Thiole (Sulfanyl- oder Mercaptoverbindungen) oder dergleichen, soweit sie unter Lagerbedingungen zu einer störenden Reaktion führen würden.

Die Komponente a) auf Basis mindestens eines mindestens eine Si-gebundene hydrolysierbare Gruppe beinhaltenden silanterminierten Kunstharzes beinhaltet mindestens ein derartiges silanterminiertes Kunstharz, insbesondere mindestens eines der oben oder insbesondere unten nach den unter (i), (ii), (iii), (iv), (v) und/oder (vi) bzw. (A), (B), (C), (D), (E) und/oder (F) genannten Verfahren erhältlichen Kunstharze.

Unter Si-gebundenen hydrolysierbaren Gruppen (in dieser Offenbarung auch mit L symbolisiert) sind beispielsweise Halogenatome (Halogen, wie Chloro), Ketoximate, Amino, Aminoxy, Mercapto, Acyloxy, Aryloxy, Aralkyloxy (= Arylalkoxy) oder insbesondere Alkyloxy (Alkoxy) zu verstehen.

Unter Si-gebundenen hydrolysierbaren Gruppen sind insbesondere solche Gruppen L zu verstehen, die Bestandteil einer Gruppe der Formel Z sind,

$$-Si(R^B)_{3-t}(L)_t \qquad (Z)$$

worin $R^B$ unabhängig voneinander für eine Alkyl-, Arylalkyl- oder Arylgruppe stehen kann, vorzugsweise für Alkyl,
t für eine ganze Zahl von 1 bis 3 steht und
L für eine Si-gebundene hydrolysierbare Gruppe, insbesondere Alkoxy, steht.

Diese Si-gebundenen hydrolysierbaren Gruppen finden sich insbesondere in Silanen, die als Si-Substituenten mindestens einen hydrolysierbaren Rest, insbesondere Alkoxy, und mindestens einen Substituenten mit einer reaktiven funktionellen Gruppe, ausgewählt aus $-NH_2$ (Amino), -NH- (sek. Amino), -SH (Mercapto), Epoxy, -NCO (Isocyanato), (Meth)acryloyl-oder Anhydrido-Gruppen aufweisen. Hierunter sind beispielsweise entsprechende Silane zu verstehen, die mindestens einen hydrolysierbaren Rest und mindestens eine Amino-, sek. Amino-, Mercapto-, Epoxy-, Isocyanato-, (Meth)acryloyl- und/oder Anhydrido-Gruppe tragen, beispielsweise Silane der Formel I,

$$[R_1-X-(CH_2)_n-]_p-Si(R^B)_q(L)_t \qquad (I)$$

worin

X für S (bevorzugt) oder NH (bevorzugt) oder O oder NCO oder nichts steht; wobei X nichts ist (= fehlt), wenn $R_1$ für Anhydrido steht;

$R_1$ für nichts, Wasserstoff, Cycloalkyl, Alkyl, Aminoalkyl, Epoxyalkyl, (Meth)acryloyl-, Aryl, Acyl, Heterocyclyl (insbesondere Anhydrido) oder für einen Rest der Formel $-[(CH_2)_{n^*}]_{p^*}-Si(R^{B^*})_{q^*}(L^*)_{t^{**}}$ steht, worin, jeweils unabhängig vom anderen Rest, $R^{B*}$ die nachfolgend für $R^B$ genannten Bedeutungen, L* die nachfolgend für L genannten Bedeutungen und n*, p* und t* jeweils die nachfolgend genannten Bedeutungen haben; wobei $R_1$ Wasserstoff ist, wenn X für S steht; wobei X für O steht, wenn $R_1$ Epoxyalkyl oder Methacryloyl ist; wobei $R_1$ nichts ist, wenn X für NCO (= Isocyanato) steht;

$R^B$ unabhängig voneinander für eine Alkyl-, Arylalkyl- oder Arylgruppe stehen kann, vorzugsweise für Alkyl,

L für einen hydrolysierbaren Rest, insbesondere Alkoxy, steht;

n und, falls vorhanden,n* unabhängig voneinander für eine positive ganze Zahl, insbesondere 1 bis 10, stehen;

p und, falls vorhanden, p* unabhängig voneinander für 1 bis 3 stehen;

q und, falls vorhanden, q* unabhängig voneinander für 0 bis 2 stehen; und

t und, falls vorhanden, t* unabhängig voneinander für 1 bis 3 stehen,

mit der Maßgabe, dass gilt: p + q + t = 4 und, falls vorhanden, p* + q* + t* = 4.

Besonders vorteilhaft können hierbei solche Silane verwendet werden, die den alpha-Effekt zeigen, also z.B. worin n und gegebenenfalls n* in obiger Formel I gleich 1 ist (n = 1 und ggf. n* = 1 in Formel I), z.B. N-Cyclohexylaminomethyl-methyldiethoxysilan, N-Cyclohexylamino-methyl-trimethoxysilan, Phenylaminomethyl-trimethoxysilan, Phenylaminomethyl-methyldimethoxysilan, N-Trimethoxysilylmethyl-O-methylcarbamat, N-Dimethoxy-(methyl)silylmethyl-O-methyl-carbamat). Unter dem alpha-Effekt ist die Wechselwirkung zwischen Silicium und einer geminalen (z.B. über einen Kohlenstoff beispielsweise eine Methylengruppe gebundenen) Donorgruppe (z.B. Amino, sek-Amino oder Mercapto (Sulfanyl)) zu verstehen, der eine erhöhte Reaktivität der Silane und damit deren beschleunigte Härtung unterstützt.

Unter Epoxy- und/oder Isocyanatgruppen und/oder ferner (Meth)acrylgruppen und/oder ferner Anhydrido-Gruppen, beinhaltenden und mindestens eine Si-gebundene hydrolysierbare Gruppe beinhaltenden Silanen sind insbesondere solche zu verstehen, die ein oder mehrere Gruppen ausgewählt aus Epoxy-, Isocyanat-, (ferner) Methacrylat- und (ferner) Anhydridogruppen und mindestens eine Si-gebundene hydrolysierbare Gruppen tragen, wie beispielsweise entsprechende bevorzugte Silane der Formel II,

$$[Y\text{-}(CH_2)_a\text{-}]\text{-}Si(R^B)_{3-t}(L)_t \qquad (II)$$

worin

Y für Isocyanato (-N=C=O), für Epoxyalkoxy, oder für Meth)acryloyloxy oder für eine Anhydrido-Gruppe steht;

$R^B$ unabhängig voneinander für eine Alkyl-, Arylalkyl- oder Arylgruppe stehen kann, vorzugsweise für Alkyl,

L für einen hydrolysierbaren Rest, insbesondere Alkoxy, steht,

a für eine positive ganze Zahl, insbesondere 1 bis 10, vor allem 1 bis 3, steht; und

t für 1 bis 3 steht.

Besonders bevorzugt sind solche Gruppen, bei denen mindestens ein Teil den sogenannten Alpha-Effekt aufweisen, z.B. erhältlich mit Geniosil XL 42, Wacker Chemie, aus dessen Isocyanatogruppe.

Bei den Aminogruppen und/oder (ferner) Thiol-Gruppen beinhaltenden und mindestens eine Si-gebundene hydrolysierbare Gruppe beinhaltenden Silanen handelt es sich vorzugsweise um solche der Formel I, wie oben gezeigt, worin p für 1 steht,
X für NH oder für S steht;
$R_1$ für nichts, Wasserstoff, Cycloalkyl, Alkyl, Aminoalkyl, Aryl, Acyl, oder für einen Rest der Formel $-[(CH_2)_n]-(R^{B^*})_{3-t^*}(L^*)_{t^*}$ * steht, worin, jeweils unabhängig vom anderen Rest, $R^{B*}$ die nachfolgend für $R^B$ genannten Bedeutungen, L* die nachfolgend für L genannten Bedeutungen und n*, p* und t* jeweils die nachfolgend genannten Bedeutungen haben; wobei $R_1$ Wasserstoff ist, wenn X für S steht;
$R^B$ unabhängig voneinander für eine Alkyl-, Arylalkyl- oder Arylgruppe stehen kann, vorzugsweise für Alkyl,
L für einen hydrolysierbaren Rest, insbesondere Alkoxy, steht;
n und, falls vorhanden,n* unabhängig voneinander für eine positive ganze Zahl, insbesondere 1 bis 10, stehen;
p und, falls vorhanden, p* unabhängig voneinander für 1 bis 3 stehen; und t und, falls vorhanden, t* unabhängig voneinander für 1 bis 3 stehen.

Acyl steht innerhalb dieser Offenbarung stets für einen Rest einer Carbonsäure oder einer Sulfonsäure, beispielsweise einen Aryl-, Alkyl- oder Aralkyl-carbonsäure- oder -sulfonsäure-Rest, wie $C_1$-$C_7$-Alkanoyl, z.B. Acetyl oder Propionyl, Aroyl (Aryl-C(=O)-), wie Benzoyl, oder dergleichen.

Alkyl steht innerhalb dieser Offenbarung stets für insbesondere einen unverzweigten oder ein- oder mehrfach verzweigten Alkylrest mit beispielsweise 1 bis 20, vorzugsweise 1 bis 10 Kohlenstoffatomen, beispielsweise mit 1 bis 4 Kohlenstoffatomen, wie z.B. Methyl, Ethyl, n-Propyl, Isopropyl, n-Butyl, sek.-Butyl, Isobutyl oder tert-Butyl.

Heterocyclyl bedeutet insbesondere einen mono- di- oder trizyklischen, insbesondere monozyklischen Rest 3 bis 20, vorzugsweise 3 bis 8 Ringatomen, von denen ein oder mehrere , insbesondere 2, als Heteroatome unabhängig voneinander ausgewählt aus N, O und S vorliegen, und kann durch ein oder mehrere Oxogruppen substituiert sein, insbesondere solche, die an Ringkohlenstoffatome gebunden sind, die über ein O-Heteroatom gebunden sind (was zu Anhydrido führt).

Unter Heterocyclyl fällt somit insbesondere auch Anhydrido, bei dem es sich um einen cyclischen Rest handelt, der folgendes ringschließendes Brückenelement enthält: -C(=O)-O-C(=O)-. Der Ring beinhaltet also eine Carbonsäureanhydridgruppe. Ein mögliches bevorzugtes Beispiel ist 2,5-Dioxo-oxolan-3-yl, ein anderes die entsprechende ungesättigte Variante 2,5-Dioxo-oxol- -3-yl mit Doppelbindung zwischen den C-Atomen in Stellung 3 und 4 des Rings, ein weiteres ein in 3,4-Stellung benzoannelierter 2,5-Dioxolan-3-ylrest.

Aliphatisch (z.B. Alkyl) bedeutet, dass die entsprechenden Polyisocyanate gesättigte Kohlenwasserstoffketten mit 1 bis 20, vorzugsweise 1 bis 10, Kohlenstoffatomen, die geradkettig und/oder verzweigtkettig sein können, wie Methylen, oder Hexamethylen, oder gesättigte cyclische Reste, die mit ein oder mehreren Alkylgruppen substituiert sein können, wie Isophoronylen (1,1,3,3-tetramethylcyclohexanylen) oder Dicyclohexylmethylen, enthalten.

Aromatisch (z.B. Aryl) bedeutet, dass die entsprechenden Polyisocyanate aromatische Reste mit 6 bis 18 Kohlenstoffresten enthalten, wie Phenylen, Naphthylen oder Fluorenylen, die unsubstituiert oder (beispielsweise mit ein oder mehreren, z.B. bis zu drei, $C_1$-$C_7$-Alkylreste, wie ein oder mehreren Methylgruppen) substituiert sein können. Bevorzugt als Aryl ist Phenyl, Naphthyl oder Toluyl.

Aromatisch-aliphatisch (z.B. Arylalkyl) bedeutet, dass die entsprechenden Reste Kombinationen aus aliphatischen Resten und aromatischen Resten, wie vorstehend genannt, enthalten.

Dass "X für nichts" steht oder X nichts ist oder dergleichen, bedeutet, dass der Rest "-X-" in der jeweiligen Formel für eine einfache Bindung steht. Dass $R_1$ "nichts" ist, bedeutet, dass der Rest $R_1$ fehlt.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

(Meth)acryl steht für Acryl, Methacryl ider Acryl und Methacryl (als Gemisch).

Teilweise durch Reaktion untereinander als Biuret-, Allophanat-, Uretdion-, Isocyanurat-, Iminooxadiazindion- und/oder Uretonimin-Gruppen vorliegende Isocyanatreste tragende Harze mit Silanen sind vorzugsweise solche der wie folgt definierten Biuret-, Allophanat-, Uretdion-, Isocyanurat-, Iminooxadiazindion- und/oder Uretonimin-Typ-Strukturen:

Uretdion-Typ-Strukturen beinhalten Gruppen (oder bestehen insbesondere aus Verbindungen) der Formel A

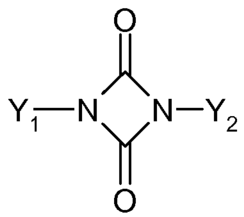

(A)

worin $Y_1$ und $Y_2$ unabhängig voneinander aus Alkyl, Aryl oder Alkylaryl ausgewählt sein können, wobei mindestens einer oder alle dieser Reste durch mindestens eine freie Isocyanatgruppe substituiert sind, wobei ein Teil der Isocyanatgruppen erneut Bestandteil von entsprechenden Uretdion-Typ- oder weiteren ggf. auch durch Nebenreaktionen entstehenden Strukturen sein können, also pro Molekül mehrere solcher Gruppen, beispielsweise bis zu zehn, vorkommen können, so dass insgesamt mindestens eine oder vorzugsweise zwei, oder mehr, freie Isocyanatgruppen je Molekül der Formel A verbleiben.

Isocyanurat-Typ-Strukturen beinhalten Strukturen des Typs (oder bestehen insbesondere aus Verbindungen) der Formel B

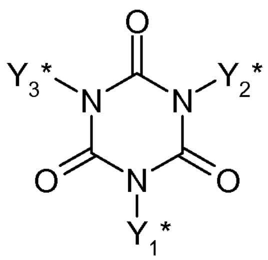

, (B)

worin $Y_1$*, $Y_2$* und $Y_3$* unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren ggf. auch durch Nebenreaktionen entstehenden Strukturen sein können, also pro Molekül der Formel B mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel B verbleiben.

Iminooxadiazindion-Typ-Strukturen beinhalten Strukturen des Typs (oder bestehen insbesondere aus Verbindungen) der Formel C

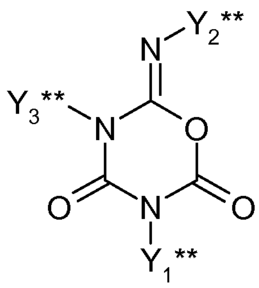

(C)

worin $Y_1$**, $Y_2$** und $Y_3$** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Iminooxadiazindion-Typ- oder weiteren ggf. auch durch Nebenreaktionen entstehenden Strukturen sein können, also pro Molekül der Formel C mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel C verbleiben.

Uretonimin-Typ-Strukturen beinhalten Strukturen des Typs (oder bestehen insbesondere aus Verbindungen) der Formel D

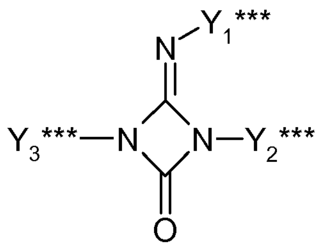

, (D)

worin $Y_1$***, $Y_2$*** und $Y_3$*** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren ggf. auch durch Nebenreaktionen entstehenden Strukturen sein können, also pro Molekül der Formel D mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel D verbleiben.

Biuret-Typ-Strukturen beinhalten Strukturen des Typs (oder bestehen insbesondere aus Verbindungen) der Formel E

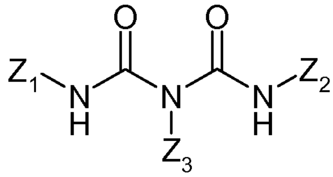

(E)

worin $Z_1$, $Z_2$ und $Z_3$ unabhängig voneinander aus Alkyl, Aryl oder Alkylaryl ausgewählt sein können, wobei mindestens einer oder vorzugsweise zwei oder alle dieser Reste durch mindestens eine Isocyanatgruppe oder substituiert sind, wobei Isocyanatgruppen erneut Bestandteil von entsprechenden Biuret-Typ- oder weiteren ggf. auch durch Nebenreaktionen entstehenden Strukturen sein können, also pro Molekül mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel E verbleiben.

Allophanat-Typ-Strukturen beinhalten Strukturen des Typs (oder bestehen insbesondere aus Verbindungen) der Formel F

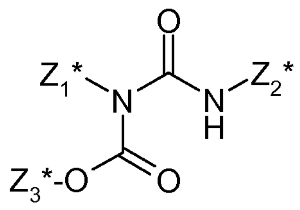

(F)

worin $Z_1$*, $Z_2$* und $Z_3$* unabhängig voneinander aus Alkyl, Aryl oder Alkylaryl ausgewählt sein können, wobei mindestens einer oder vorzugsweise zwei dieser Reste durch eine Isocyanatgruppe oder substituiert sind, wobei Isocyanatgruppen erneut Bestandteil von entsprechenden Allophanat-Typ- oder weiteren ggf. auch durch Nebenreaktionen entstehenden Strukturen sein können, also pro Molekül der Formel F mehrere, beispielsweise bis zu zehn, solcher Gruppen vorkommen können, so dass insgesamt mindestens eine oder vorzugsweise zwei oder drei, oder mehr, freie Isocyanatgruppen je Molekül der Formel F verbleiben.

Entsprechende bevorzugte Verbindungen, wie z.B. HDI- oder IPDI-Isocyanurat, oder HDI-oder IPDI-Iminooxadiazindione, Uretonimine oder jeweils höhere Homologe davon oder wie z.B. HDI-Biuret oder HDI-Uretdion, oder jeweils höhere Homologe davon) sind bekannt oder nach bekannten Verfahren herstellbar, beispielsweise wie in der EP 0 000 194, der EP 0 531 820, DE 2 616 416, EP 0 010 589, US 3,124,605, US 3,358,010, US 3,644,490, US 3,769,318, US 4,160,080, US 4,177,342, US 5,124,427, US 5,208,334, US 5,235,018 oder dergleichen.

HDI steht für Hexamethylendiisocyanat, IPDI für Isophorondiisocyanat.

Geeignete Ausgangsmaterialien für derartige Komponenten sind beispielsweise Diisocyanatodiphenylmethan und seine Strukturisomere, Polymeren und Homologen, Toluoldiisocyanat und seine Strukturisomeren, Polymeren und Homologen, 1,6-Hexamethylendiisocyanat, 1-Isocyanato-3,3,5-trimethyl-5-isocyanatomethylcyclohexan (Isophorondiisocyanat) und Diisocyanato-dicyclohexylmethan und seine Strukturisomeren, Polymeren und Homologen, sowie deren Mischungen. Geeignet sind auch jeweils Oligomere dieser Komponenten.

Unter Strukturisomeren sind insbesondere Stellungsisomere zu verstehen, unter Polymeren oder Homologen z.B. entsprechende Präpolymeren oder aus der Herstellung bedingte höhermolekulare Verbindungen.

Wo die Rede von "weiteren ggf. auch durch Nebenreaktionen entstehenden Strukturen" ist, bezieht sich das auf andere als die jeweils genannten Isocyanat-Reaktionsprodukte, wie unvollständige Reaktionsprodukte oder jeweils aus anderen der genannten Gruppen stammende Strukturen. Derartige Nebenprodukte können oft nicht vermieden werden und können beispielsweise in einem Anteil von bis zu 50 Prozent der Zahl aller umgesetzten Isocyanatgruppen vorhanden sein.

Wo die Rede davon ist, dass "Isocyanatgruppen erneut Bestandteil" sein können von Uretdion-, Isocyanurat-, Iminooxadiazindion-, Uretonimin-, Biuret- oder Allophanat-Typ-Strukturen oder weiteren gegebenenfalls durch Nebenreaktionen entstehenden Strukturen bedeutet dies, dass die Isocyanatgruppen in nach entsprechender Reaktion abgewandelter Form vorliegen können (dann also nicht mehr als Isocyanatgruppen als solche).

Besonders bevorzugt sind oligomere $C_1$-$C_{10}$-Methyiendiisocyanate, z. B. Hexamethylen-diisocyanat, die cyklische Strukturen (b1)) oder insbesondere Biuret- und/oder Allophanat-Strukturen beinhalten.

Aryl ist innerhalb dieser Offenbarung stets vorzugsweise ein aromatischer Rest mit 6 bis 18 Kohlenstoffatomen, beispielsweise Phenyl, Naphthyl oder Toluyl.

Aralkyl ist innerhalb dieser Offenbarung stets Aryl wie zuvor definiert, welches an Alkyl wie vorstehend definiert gebunden ist, beispielsweise Benzyl oder Phenylethyl, kann aber bei Aufzählungen innerhalb dieser Offenbarung vorzugsweise weggelassen werden.

Cycloalkyl steht insbesondere für mono-, di- oder trizyklisches, vorzugsweise monozyklisches, Cycloalkyl mit 3 bis 20 Kohlenstoffatomen, vorzugsweise mit 3 bis 10 Kohlenstoffatomen, im Ring, insbesondere für Cyclopentyl oder Cyclohexyl.

Epoxyalkyl steht vorzugsweise für Alkyl wie oben definiert, das durch eine Epoxygruppe unter Ringbildung substituiert ist.

Epoxyalkyl ist insbesondere Epoxy-$C_1$-$C_7$-alkoxy, wie besonders vorzugsweise , wie insbesondere( 2,3-Epoxypropan-1-yl) der Formel

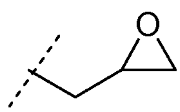

(die gestrichelte Linie markiert das Ende der Bindung zum Rest des Moleküls).

Epoxyalkoxy ist insbesondere Epoxy-$C_1$-$C_7$-alkoxy, wie insbesondere ein Rest der Formel

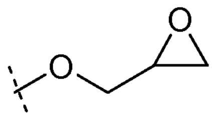

(die gestrichelte Linie markiert das Ende der Bindung zum Rest des Moleküls).

Viskositäten werden nach DIN EN ISO 2555 mit einem Brookfield DV-III+-Viskosimeter mit Spindel 3 bei 10 Umdrehungen/Minute (U/min) bei 23 °C gemessen und in Pa·s (nachfolgend auch als Pa * s oder Pas wiedergegeben) angegeben.

Die Bestimmung des NCO-Gehaltes eines Isocyanates erfolgt durch Reaktion eines Überschusses an Dibutylamin mit dem Isocyanat, gefolgt von einer Rücktitration des überschüssigen Amins mit Chlorwasserstoffsäure (HCl), nach der Formel:

$$\%NCO = (42{,}02\ g/mol \cdot [\text{Äquivalente an } Bu_2NH \text{ verbraucht}]/[\text{Gewicht der Probe}]) \cdot 100\%$$

Beispielsweise kann diese Messung nach Siggia, S. and J. G. Hanna. 1948. Anal. Chem., 20:1084, oder nach der nicht verbindlich gewordenen Methode nach ASTM D4666-87, "Standard Test Method for Polyurethane Raw Materials: Determination of Amine Equivalent of Crude or Modified Isocyanates", durchgeführt werden.

Der Anteil des silanterminierten Kunstharzes an dem Injektions(insbesondere Mehr-Komponenten)-Kunstharz liegt vorzugsweise, bezogen auf das Gewicht aller Komponenten (insbesondere von a) und b)) bei 0,5 bis 99,99, insbesondere bei 5 bis 90, wie z.B. vorzugsweise 30 bis 80 Gew.-%.

Als Komponente b) mit einem wasserbasierten Härter eignet sich insbesondere eine solche, die Wasser und gewünschtenfalls ein oder mehrere weitere Zusätze beinhaltet. Vorzugsweise beinhaltet die Komponente b) als wasserbasierten Härter (der durch Hydrolyse der hydrolysierbaren an Si gebundenen Gruppen in Komponente a) für Vernetzung sorgt) eine wasserhaltige Masse, beispielsweise Wasser als solches oder Wasser in Gel-oder Pastenform, und besteht beispielsweise in einer möglichen bevorzugten Ausführungsform aus Wasser; oder aus Wasser (beispielsweise, bezogen auf Komponente b), in einem Anteil von 0,1 bis 99,9 Gew.-%, wie insbesondere von 1 bis 80 Gew.-%; und daneben ein oder mehreren Verdickungsmitteln, wie wasserlöslichen und/ oder wasserquellbaren Polymeren oder organischen Verdickungsmitteln, z.B. Agar, Carrageen, Tragant, Gummi arabicum, Pektine, Alginate, Polyosen, Guar-Mehl, Johannismehl, Stärke, Dextrine, Gelatine, Casein, Carboxymethylcellulose, Hydoxyethylcellulose, Hydroxypropylcellulose, anderen Celluloseethern, Poly(meth)acrylsäurederivaten, Polyvinylethern, Polyvinylalkohol, Polyamiden, Polyiminen, gefällten Polykieselsäuren, hochdispersen pyrogenen hydrophilen Kieselsäuren, Tonmineralien wie Montmorillonit oder dergleichen. Die Gewichtsanteile der Verdickungsmittel können beispielsweise 0,1 bis 20 Gew.-% betragen, bezogen auf das Gesamtgewicht von Komponente b).

Die wasserhaltige Masse kann Wasserglas beinhalten oder in Form von Wasserglas vorliegen, d.h. insbesondere einer wässrigen Lösung von Alkalisilikaten, erhältlich beispielsweise als Reaktionsprodukt von Siliciumdioxid und Alkalimetallbasen, wie Natrium- und/oder Kaliumbasen, wie den entsprechenden Hydroxiden, oder entsprechenden Carbonaten, wie Soda, mit beliebigem molarem Wasserglasmodul (molares Verhältnis von Siliziumdioxid zu Alkalimetallbase). Beispielsweise kann der Gewichtsanteil der festen Komponenten von Wasserglas bei 0,1 bis 50 Gew.-%, bezogen auf das Gesamtgewicht der Komponente b), vorhanden sein. Wasserglas ist besonders bevorzugt als wasserhaltige Komponente.

Auch weitere bereits genannte Zusätze, wie Füllstoffe und Aditive, können (insbesondere in den bereits genannten Mengen) in Komponente b) zugesetzt sein.

Für die oben genannte Reaktion (i) durch Umsetzung organischer Polyamine mit Epoxy- und/oder Isocyanatgruppen und/oder (ferner) (Meth)acrylgruppen und/oder (ferner) Anhydridogruppen beinhaltenden und mindestens eine Si-gebundene hydrolysierbare Gruppe beinhaltenden Silanen ist beispielsweise eine Reaktion eines aliphatischen, araliphatischen oder aromatischen Polyamins (oder eines Gemisches von zwei oder mehr solcher Verbindungen) oder des Hydrazins mit einem entsprechenden Silan eine mögliche bevorzugte Variante.

Aliphatische, Araliphatische oder aromatische Polyamine beinhalten einen aliphatischen, araliphatischen oder aromatischen Rest, vorzugsweise wie oben definiert, und zwei oder mehr Aminogruppen. Beispiele für solche Verbindungen sind Ethylendiamin, 1,3-Diaminopropan, Tetra- oder Hexamethylen-diamin, Diethylentriamin, Tetraethylentetraamin, Pentaethylhexaamin, Diaminopropylmethyldiamin, Triaminopropylimine (z.B. mit mittlerem Molekulargewicht 200 bis 2'000'000, ermittelt über Lichtstreuung), Polyalkylenamine, wie z.B. Dipropylentriamin, Tripropylentetramin, Isophorondiamin (IPD), m-Xylylendiamin (MXDA), Polyalkylenoxidamine (z. B. Jeffamine®, Huntsman Performane Products, The Woodlands, TX, USA)) oder dergleichen, oder Gemische von zwei oder mehr davon.

Bei den (ein oder mehrere) Epoxy- und/oder Isocyanatgruppen und/oder (ferner) (Meth)acrylgruppen und/oder (ferner) Anhydridogruppen beinhaltenden und mindestens eine Si-gebundene hydrolysierbare Gruppe beinhaltenden Silanen handelt es sich beispielsweise insbesondere um solche der Formel II, wie oben gezeigt und definiert.

Ein nicht limitierendes Beispiel für eine derartige Reaktion ist die Umsetzung von 3-Glycidoxypropyltriethoxysilan mit Ethylendiamin. zu einer Verbindung der Formel III

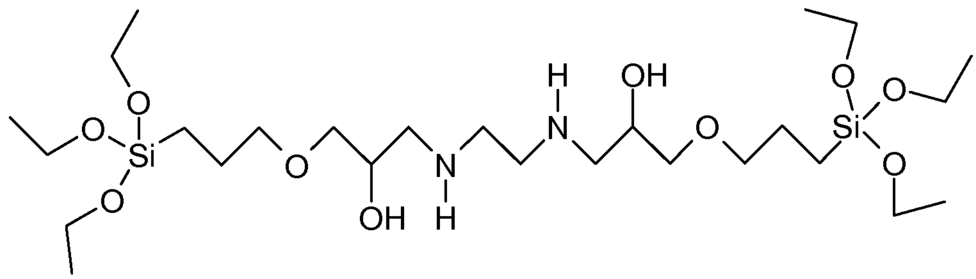

(III)

Für die oben genannte Reaktion (ii) durch Umsetzung mono- oder höherfunktionaler hydroxygruppenhaltiger Harze oder Polyole mit Epoxy- und/oder Isocyanatgruppen und/oder ferner Anhydridogruppen beinhaltenden und mindestens eine Si-gebundene hydrolysierbare Gruppe beinhaltenden Silanen kommen als hydroxygruppenhaltige Harze oder Polyole solche in Betracht wie beispielsweise Polyesterharze, Polyesterpolyole, Polyetherpolyole (weniger bevorzugt), ethoxyliertes Bisphenol-A , Epoxidfestharze, Polyacrylate oder Polyalkylenoxide in Frage.

Bevorzugte Epoxy- und/oder Isocyanatgruppen und/oder ferner Anhydridogruppen beinhaltende mindestens eine Si-gebundene hydrolysierbare Gruppe beinhaltende Silane für Reaktion (ii) können insbesondere solche der Formel II wie oben beschriebenen ausgewählt sein, insbesondere solchen der Formel II mit Y = Isocyanato, Epoxyalkoxy oder Anhydrido.

Für die oben genannte Reaktion (iii) durch Umsetzung vinylgruppenhaltiger Harze mit Aminogruppen und/oder (ferner) Thiol-Gruppen beinhaltenden und mindestens eine Si-gebundene hydrolysierbare Gruppe beinhaltenden Silanen kommen beispielsweise als vinylgruppenhaltige Harze Epoxy(meth)acrylate, ungesättigte Polyesterharze, Vinylesterharze, Urethan(meth)acrylate, Hydroxyalkyl(meth)acrylate, Alkyl-, Cycloalkyl- oder Aryl- mono, di-, tri-, tetra-, penta oder hexa-ol-(meth)acrylate oder (Poly)(meth)acrylate, oder Mischungen von zwei oder mehr davon, in Frage.

Bei den ein oder mehrere Aminogruppen (besonders bevorzugt) und/oder (ferner) Thiol-Gruppen beinhaltenden und mindestens eine Si-gebundene hydrolysierbare Gruppe beinhaltenden Silanen handelt es sich vorzugsweise um solche der Formel I wie oben gezeigt, insbesondere solche, worin $R_1$ für Wasserstoff und X für NH oder S steht und die übrigen Reste die oben für Formel I genannten Bedeutungen haben.

Für die oben genannte Reaktion (iv) durch Umsetzung anhydridgruppenhaltiger Verbindungen mit Aminogruppen oder (ferner) Isocyanatgruppen und mindestens eine Si-gebundene hydrolysierbare Gruppe beinhaltenden Silanen finden als anyhdridgruppenhaltige Verbindungen beispielsweise Carbonsäureanhydride von zwei oder mehr Carboxylreste enthaltenden Carbonsäuren in Frage, wie z.B. Pyromellitsäureanhydrid (Benzol-1,2,4,5-tetracarbonsäureanhydrid), Oxalsäureanhydrid, Malonsäureanhydrid, Bernsteinsäureanhydrid, Glutarsäureanhydrid, Adipinsäureanhydrid, Maleinsäureanhydrid, Fumarsäureanhydrid, Phthalsäureanhydrid, Isophthalsäureanhydrid, Terephthalsäureanhydrid oder SMA (Poly-Styrol-comaleinsäureanhydrid).

Bei den besonders bevorzugten ein oder mehrere Aminogruppen oder ferner Isocyanatgruppen beinhaltenden und mindestens eine Si-gebundene hydrolysierbare Gruppe beinhaltenden Silanen handelt es sich vorzugsweise um solche der Formel I wie oben gezeigt, worin $R_1$ für Wasserstoff und X für NH steht, oder X für -NCO steht und $R_1$ für nichts steht, und die übrigen Reste die oben für Formel I genannten Bedeutungen haben.

Für die oben genannte Reaktion (v) durch Umsetzung von mindestens teilweise durch Reaktion untereinander als Biuret-, Allophanat-, Uretdion-, Isocyanurat-, Iminooxadiazindion- und/ oder Uretonimin-Gruppen vorliegende Isocyanatreste tragenden Harzen mit Silanen, die als Substituenten mindestens eine Si-gebundene hydrolysierbare Gruppe und mindestens eine Isocyanatgruppen gegenüber reaktive (funktionale) Gruppe ausgewählt aus aus $-NH_2$ (Amino), -NH- (sek. Amino) und -SH (Mercapto), Epoxy, Isocyanato und Anhydrido, insbesondere eine Aminogruppe, aufweisen, finden vorzugsweise als Isocyanatreste tragende Harze ein oder mehrere ausgewählt aus denen der Formeln (A), (B), (C), (D), E) oder (F), wie oben gezeigt und definiert, Verwendung, während als Silane solche der Formel II, wie oben definiert, vorzugsweise mit X = NH und $R_1$ = Wasserstoff, verwendet werden. Die Reaktion kann beispielsweise unter Bedingungen wie oder analog den im nachfolgenden Beispiel genannten durchgeführt werden.

Es ist auch möglich, dass zwei oder mehr Produkte der Reaktionen (i), (ii), (iii), iv oder (v) miteinander gemischt werden oder Teil unterschiedlicher Komponenten a) (z.B. $a^1$), $a^2$), ...) eines erfindungsgemäßen bzw. erfindungsgemäß

verwendbaren Mehr-Komponenten-Kunstharzes sind.

Die Mischung unterschiedlicher mindestens eine Si-gebundene hydrolysierbare Gruppe beinhaltender Silane ermöglicht beispielsweise insbesondere eine Feinabstimmung der Eigenschaften der Kunstharze.

Wo Bezug genommen wird auf das Gesamtgewicht (z.B. aller Komponenten), bezieht sich das auf das Gewicht aller den Mörtel als solchen bildenden Komponenten, also z.B. außer der Verpackung und weiterer nicht direkt am Mörtel beteiligter Teile, wie Statikmischer und dergleichen.

Die Erfindung betrifft in bevorzugten Ausführungsformen die in den Ansprüchen und insbesondere den Unteransprüchen genannten Erfindungen - die Ansprüche werden hier durch Bezugnahmen aufgenommen.

Die nachfolgenden Beispiele dienen der Illustration der Erfindung, ohne ihren Umfang einzuschränken.

Mengenangaben sind in Gewichtsprozent (Gew.-%), bezogen auf die Gesamtmenge aller Komponenten.

Beispiel 1: Kennzeichnungsarmer 1-Komponenten-Injektionsmörtel basierend auf Silanterminierten Polymeren

A) 60 g eines Isocyanates basierend auf Hexamethylen-diisocyanat mit Biuret-Strukturen (Vestanat® HB 2640/LV; Evonik Degussa GmbH, Essen, Deutschland) mit einer Funktionalität von 3 bis 4 und einer Dichte von 1,13 g/ml (nach den Angaben des Herstellers 23 % entsprechend 13,8 g oder 0,32857 Mol Isocyanatgruppen) werden mit 64,8 g 3-Aminopropyltrimethoxysilan (Dynasilan® AMMO, Evonik Degussa GmbH, Essen, Deutschland), entsprechend einer Menge von 0,36141 Mol und 0,36141 Mol Aminogruppen, gemischt (Verhältnis r = Molmenge Isothiocyanat geteilt durch Molmenge Silan = 1,09993).

B) Nach der Reaktion der Isocyanat- mit den Aminogruppen wird das erhaltene Harz wie folgt weiter verwendet:

Injektionsmörtel a) 30 g des Harzes nach A) werden mit 12 g Portlandzement CEM I 52,5 (Fa. Dyckerhoff AG, Wiesbaden, Deutschland) und 2,35 g (0,13031 Mol) Wasser gemischt und in ein Bohrloch nach Reinigen desselben durch Ausblasen, Bürsten, Ausblasen und erneutes Ausblasen, Bürsten und Ausblasen in Beton der Festigkeitsklasse C20/25 (DIN 1045-1 und DIN1045-2) mit einer Ankerstange M12 eingebracht (Bohrlochdurchmesser 14 mm, Setztiefe 95 mm). Nach drei Tagen Aushärtezeit wird die Auszugskraft gemessen. Es wird ein Wert von 35 kN ermittelt.

Injektionsmörtel b) 30 g des Harzes nach A) werden mit 12 g Calcilit 6HS (beschichtetes Calciumcarbonat in Kalzitform der Firma Alpha Calcit Füllstoff GmbH & Co., Köln, Deutschland) und 2,35 g Wasser gemischt und in ein Bohrloch nach Reinigen desselben durch Ausblasen, Bürsten, Ausblasen und erneutes Ausblasen, Bürsten und Ausblasen in Beton der Festigkeitsklasse C20/25 (DIN 1045-1 und DIN1045-2) mit einer Ankerstange M12 eingebracht (Bohrlochdurchmesser 14 mm, Setztiefe 95 mm). Nach drei Tagen Aushärtezeit wird die Auszugskraft gemessen. Auch hier wird ein Wert von 35 kN ermittelt.

Beispiel 2: Kennzeichnungsarmer 2-Komponenten-Injektionsmörtel in einer Kartusche

Zwei Kammern einer Zwei-Kammerkartusche für Injektionsmörtel werden wie folgt gefüllt:

Die größere der beiden Kammern wird mit einem Gemisch aus 30 Gewichtsanteilen eine Harzes, wie es unter A) in Beispiel 1 erhältlich ist, und 12 Gewichtanteilen Zement gefüllt. Die kleinere der beiden Kammern wird mit einer wasserhaltigen Paste gefüllt, so dass die Wassermenge 2,35 Gewichtanteilen entspricht, und die Kartusche wird verschlossen.

Zur Verwendung wird sie mit einem Statikmischer ausgestattet, der die Mischung der Inhalte aus den beiden Kammern gestattet, und die resultierende Mischung in ein Bohrloch einpresst. Anschließend wird eine Ankerstange eingedrückt.

Beispiel 3: Kennzeichnungsarmer 2-Komponenten-Injektionsmörtel in einer Mehrkammerpatrone

12 g einer Mischung von 8,57 g des Harzes aus Beispiel 1 A) und 3,43 g Zement und ein stäbchenförmige Ampulle 0,7 g Wasser werden in eine Patrone M12 gefüllt.

Zum Befestigen eines Verankerungsbolzens wird die Patrone in ein Loch in einer Mauer eingeführt und der Verankerungsbolzen in das Loch drehend und/oder schlagend einvibriert, wodurch die Patrone zerbricht und Wasser und Harz/Zementmischung miteinander in Kontakt kommen.

## Patentansprüche

1. Verwendung eines Injektions-Kunstmörtels zur Befestigung von Verankerungselementen in Löchern, wobei der Injektions-Kunstmörtel mindestens eine Komponente a) auf Basis mindestens eines mindestens eine Si-gebundene hydrolysierbare Gruppe beinhaltenden silanterminierten Kunstharzes alleine umfasst und in ein Loch eingebracht wird, oder im Falle eines Mehrkomponenten-Injektions-Kunstmörtels zusätzlich mindestens eine Komponente b) mit einem wasserbasierten Härter umfasst, wobei die Komponenten im Fall eines Mehrkomponenten-Injektions-Kunstmörtels am Einsatzort gemischt und gleichzeitig und/ oder anschließend in ein Loch eingebracht werden; und gleichzeitig oder anschließend ein Verankerungselement in das Loch eingeführt wird, wobei der Injektions-Kunstmörtel frei von fein verteilten Gasen entlüftet ist derart, dass das Volumen darin gelöster Gase bei Raumtemperatur und Normaldruck bei weniger als 0,5 Vol.-% liegt und dass es sich bei den in der mindestens einen Komponente a) vorhandenen mindestens eine Si-gebundene hydrolysierbare Gruppe beinhaltenden silanterminierten Kunstharzen um solche handelt, die

   (i) durch Umsetzung organischer Polyamine mit ein oder mehrere Epoxy- und/oder Isocyanat- und/oder (Meth)acryl- und/oder Anhydrido-Gruppen beinhaltenden und mindestens eine Si-gebundene hydrolysierbare Gruppe beinhaltenden Silanen;
   (ii) durch Umsetzung mono- oder höherfunktionaler hydroxygruppenhaltiger Harze oder Polyole mit ein oder mehrere Epoxy- und/oder Isocyanat- und/oder Anhydrido-Gruppen beinhaltenden und mindestens eine Si-gebundene hydrolysierbare Gruppe beinhaltenden Silanen;
   (iii) durch Umsetzung vinylgruppenhaltiger Harze mit ein oder mehrere Amino- und/ oder Thiol-Gruppen beinhaltenden und mindestens eine Si-gebundene hydrolysierbare Gruppe beinhaltenden Silanen;
   (iv) durch Umsetzung anhydridgruppenhaltiger Verbindungen mit ein oder mehrere Aminogruppen oder Isocyanatogruppen und mindestens eine Si-gebundene hydrolysierbare Gruppe beinhaltenden Silanen;
   (v) durch Umsetzung von mindestens teilweise durch Reaktion untereinander als Biuret-, Allophanat-, Uretdion-, Isocyanurat-, Iminooxadiazindion- und/oder Uretonimin-Gruppen vorliegende Isocyanatreste tragenden Harzen mit Silanen, die als Substituenten mindestens eine Si-gebundene hydrolysierbare Gruppe und mindestens eine Isocyanatgruppen gegenüber reaktive Gruppe ausgewählt aus Amino, sek. Amino, Mercapto, Epoxy-, Isocyanato- und/oder Anhydrido-Gruppe insbesondere eine Aminogruppe, aufweisen;
   (vi) oder durch Verwendung der Produkte von zwei oder mehr der vorgenannten Umsetzungen

   erhältlich sind.

2. Verwendung nach Anspruch 1, wobei unter den Si-gebundenen hydrolysierbaren Gruppen insbesondere solche Gruppen L zu verstehen sind, die Bestandteil einer Gruppe der Formel Z sind,

   $$-Si(R^B)_{3-t}(L)_t \qquad (Z)$$

   worin der oder die Reste $R^B$ unabhängig voneinander für eine Alkyl, Arylalkyl oder Arylgruppe stehen können, vorzugsweise für Alkyl,
   t für eine ganze Zahl von 1 bis 3 steht und
   L für eine Si-gebundene hydrolysierbare Gruppe, insbesondere Alkoxy, steht

3. Verwendung nach einem der Ansprüche 1 oder 2, **dadurch gekennzeichnet, dass** für die Reaktion (i) durch Umsetzung organischer Polyamine mit Epoxy- und/oder Isocyanat- und/oder (Meth)acryl- und/oder Anhydrido-Gruppen beinhaltenden und mindestens eine Si-gebundene hydrolysierbare Gruppe beinhaltenden Silanen eine Reaktion eines aliphatischen, araliphatischen oder aromatischen Polyamins oder eines Gemisches von zwei oder mehr solcher Verbindungen oder des Hydrazins mit einem Epoxy- und/oder Isocyanat- und/ oder (Meth)acryl- und/oder Anhydrido-Gruppen beinhaltenden und mindestens eine Si-gebundene hydrolysierbare Gruppe beinhaltenden Silans der Formel II,

   $$[Y-(CH_2)_a-]-Si(R^B)_{3-t}(L)_t \qquad (II)$$

   worin

   Y für Isocyanato (-N=C=O), für Epoxyalkoxy, für Methacryloyloxy und/oder (ferner) für eine Anhydrido-Gruppe steht;
   $R^B$ unabhängig voneinander für eine Alkyl-, Arylalkyl- oder Arylgruppe stehen kann, vorzugsweise für Alkyl,

L für einen hydrolysierbaren Rest, insbesondere Alkoxy, steht,
a für eine positive ganze Zahl, insbesondere 1 bis 10, vor allem 1 bis 3, steht; und
t für 1 bis 3 steht, durchgeführt wird;

für die Reaktion (ii) durch Umsetzung mono- oder höherfunktionaler hydroxygruppenhaltiger Harze oder Polyole mit Epoxy- und/oder Isocyanat- und/oder Anhydridgruppen beinhaltenden und mindestens eine Si-gebundene hydrolysierbare Gruppe beinhaltenden Silanen die Reaktion zwischen hydroxygruppenhaltigen Harzen oder Polyolen, insbesondere Polyesterharzen, Polyesterpolyolen und/oder Polyetherpolyolen, mit Epoxy- und/oder Isocyanat- und/oder Anhydridogruppen beinhaltenden und mindestens eine Si-gebundene hydrolysierbare Gruppe beinhaltenden Silanen wie gerade unter (i) definiert, durchgeführt wird;
für die Reaktion (iii) durch Umsetzung vinylgruppenhaltiger Harze mit Amino- oder Thiolgruppen beinhaltenden und mindestens eine Si-gebundene hydrolysierbare Gruppe beinhaltenden Silanen die Reaktion von Epoxy(meth)acrylaten, ungesättigten Polyesterharzen, Vinylesterharzen, Urethan(meth)acrylaten, Hydroxyalkyl(meth)acrylaten, Alkyl-, Cycloalkyl-, Aryl-mono, di-, tri-, tetra-, penta oder hexa-ol-(meth)acrylaten und/oder (Poly)(meth)acrylaten mit ein oder mehreren Amino- und/oder Thiolgruppen beinhaltenden und mindestens eine Si-gebundene hydrolysierbare Gruppe beinhaltenden Silanen vorzugsweise der Formel 1,

$$[R_1\text{-}X\text{-}(CH_2)_n\text{-}]_p\text{-}Si(R^B)_q(L)_t \qquad \text{(I)}$$

worin

X für S (bevorzugt) oder NH (bevorzugt) oder O oder NCO oder nichts steht; wobei X nichts ist (= fehlt), wenn $R_1$ für Anhydrido steht;
$R_1$ für nichts, Wasserstoff, Cycloalkyl, Alkyl, Aminoalkyl, Epoxyalkyl, (Meth)acryloyl, Aryl, Acyl, Heterocyclyl (insbesondere Anhydrido) oder für einen Rest der Formel $-[(CH_2)_{n^*}]_{p^*}-(R^{B*})_{3-t^*}(L^*)_{t^{**}}$ steht, worin, jeweils unabhängig vom anderen Rest, $R^{B*}$ die nachfolgend für $R^B$ genannten Bedeutungen , L* die nachfolgend für L genannten Bedeutungen und n*, p* und t* jeweils die nachfolgend genannten Bedeutungen haben; wobei $R_1$ Wasserstoff ist, wenn X für S steht; wobei X für O steht wenn $R_1$ Epoxyalkyl oder Methacryloyl ist; wobei $R_1$ nichts ist, wenn X für NCO (= Isocyanato) steht;
$R^B$ unabhängig voneinander für eine Alkyl-, Arylalkyl- oder Arylgruppe stehen kann, vorzugsweise für Alkyl,
L für einen hydrolysierbaren Rest, insbesondere Alkoxy, steht,
n und, falls vorhanden,n* unabhängig voneinander für eine positive ganze Zahl, insbesondere 1 bis 10, stehen;
p und, falls vorhanden, p* unabhängig voneinander für 1 bis 3 stehen;
q und, falls vorhanden, q* unabhängig voneinander für 0 bis 2 stehen; und
t und, falls vorhanden, t* unabhängig voneinander für 1 bis 3 stehen,

mit der Maßgabe, dass gilt: p + q + t = 4 und, falls vorhanden, p* + q* + t* = 4; durchgeführt wird;
für die Reaktion (iv) durch Umsetzung anhydridgruppenhaltiger Verbindungen mit Aminogruppen oder Isocyanat-Gruppen und mindestens eine Si-gebundene hydrolysierbare Gruppe beinhaltenden Silanen die Reaktion von Carbonsäureanhydriden von zwei oder mehr Carboxylreste enthaltenden Carbonsäuren mit ein oder mehreren unter Verfahren (iii) genannten, ein oder mehrere Aminogruppen beinhaltenden und mindestens eine Si-gebundene hydrolysierbare Gruppe beinhaltenden Silanen der Formel I;
und/oder
für die Reaktion (v) durch Umsetzung von mindestens teilweise durch Reaktion untereinander als Biuret-, Allophanat-, Uretdion-, Isocyanurat-, Iminooxadiazindion- und/oder Uretonimin-Gruppen vorliegende Isocyanatreste tragenden Harzen mit Silanen, die als Substituenten mindestens eine Si-gebundene hydrolysierbare Gruppe und mindestens eine Isocyanatgruppen gegenüber reaktive Gruppe ausgewählt aus Amino, sek. Amino Mercapto, Epoxy, Isocyanato undAnhydrido, insbesondere eine Aminogruppe, aufweisen, die Reaktion von ein oder mehreren Isocyanatreste tragenden Harzen ausgewählt aus denen der Formeln A

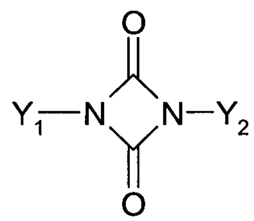

(A)

worin $Y_1$ und $Y_2$ unabhängig voneinander aus Alkyl, Aryl oder Alkylaryl ausgewählt sein können, wobei mindestens einer oder alle dieser Reste durch mindestens eine freie Isocyanatgruppe substituiert sind, und wobei ein Teil der Isocyanatgruppen erneut Bestandteil von entsprechenden Uretdion-Typ- oder weiteren gegebenenfalls auch durch Nebenreaktionen entstehenden Strukturen sein können;
der Formel B

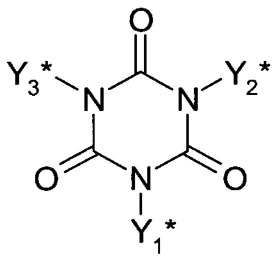

, (B)

worin $Y_1$*, $Y_2$* und $Y_3$* unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebebenfalls. auch durch Nebenreaktionen entstehenden Strukturen sein können, so dass insgesamt mindestens eine oder vorzugsweise zwei oder drei, oder mehr, freie Isocyanatgruppen je Molekül der Formel B verbleiben;
der Formel C

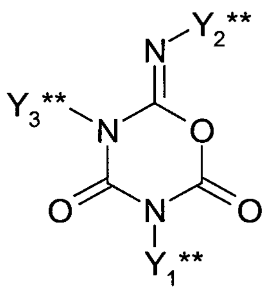

(C)

worin $Y_1$**, $Y_2$** und $Y_3$** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Iminooxadiazindion-Typ- oder weiteren gegebenenfalls auch durch Nebenreaktionen entstehenden Strukturen sein können, so dass insgesamt mindestens eine oder vorzugsweise zwei oder drei, oder mehr, freie Isocyanatgruppen je Molekül der Formel C verbleiben;
der Formel D

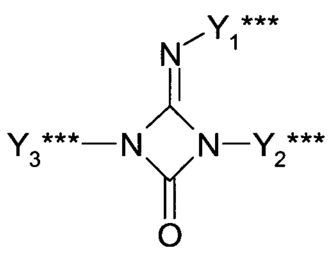

, (D)

worin $Y_1$***, $Y_2$*** und $Y_3$*** unabhängig voneinander aus Alkyl, Aryl oder Alkylaryl ausgewählt sein können, wobei mindestens einer oder vorzugsweise zwei oder alle dieser Reste durch mindestens eine freie Isocyanatgruppe substituiert sind, wobei Isocyanatgruppen erneut Bestandteil von entsprechenden Isocyanurat-Typ- oder weiteren gegebenenfalls auch durch Nebenreaktionen entstehenden Strukturen sein können, so dass insgesamt mindestens eine oder vorzugsweise zwei oder drei, oder mehr, freie Isocyanatgruppen je Molekül der Formel D verbleiben;
der Formel E

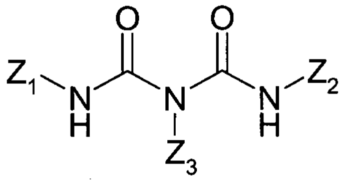

(E)

worin $Z_1$ und $Z_3$ unabhängig voneinander aus Alkyl, Aryl oder Alkylaryl ausgewählt sein können, wobei mindestens einer oder vorzugsweise zwei oder alle dieser Reste durch mindestens eine Isocyanatgruppe substituiert sind, wobei Isocyanatgruppen erneut Bestandteil von entsprechenden Biuret-Typ- oder weiteren gegebenenfalls auch durch Nebenreaktionen entstehenden Strukturen sein können, so dass insgesamt mindestens eine oder vorzugsweise zwei oder drei, oder mehr, freie Isocyanatgruppen je Molekül der Formel E verbleiben;
und der Formel F

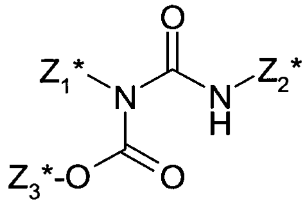

(F)

worin $Z_1$*, $Z_2$* und $Z_3$* unabhängig voneinander aus Alkyl, Aryl oder Alkylaryl ausgewählt sein können, wobei mindestens einer oder vorzugsweise zwei dieser Reste durch eine Isocyanatgruppe oder substituiert sind, wobei Isocyanatgruppen erneut Bestandteil von entsprechenden Allophanat-Typ- oder weiteren gegebenenfalls auch durch Nebenreaktionen entstehenden Strukturen sein können, so dass insgesamt mindestens eine oder vorzugsweise zwei oder drei, oder mehr, freie Isocyanatgruppen je Molekül der Formel F verbleiben;
und mindestens einem Silan der Formel I wie für Reaktion (iii) oben definiert durchgeführt wird.

**4.** Verwendung nach einem der Ansprüche 1 bis 3, **dadurch gekennzeichnet, dass** es sich bei dem Injektions-Kunstmörtel um einen Mehrkomponenten-Kunstmörtel, insbesondere um einen Zweikomponenten-Kunstmörtel mit jeweils einer der Komponenten a) und b) handelt.

**5.** Verwendung nach einem der Ansprüche 1 bis 3, **dadurch gekennzeichnet, dass** es sich bei dem Injektions-Kunstmörtel um einen Einkomponenten-Kunstmörtel mit einer der Komponenten a) handelt.

**6.** Verwendung nach Anspruch 4, **dadurch gekennzeichnet, dass** die mindestens eine Komponente b) als wasserbasierten Härter Wasser oder eine wasserhaltige Masse in Gel-oder Pastenform beinhaltet, wobei die wasserhaltige Masse in Gel- oder Pastenform Wasser und daneben ein oder mehrere Verdickungsmittel, insbesondere wasserlösliche und/ oder wasserquellbare Polymere oder anorganische Verdickungsmittel, und/oder insbesondere Wasserglas beinhaltet.

**7.** Verwendung nach einem der Ansprüche 4 oder 6, **dadurch gekennzeichnet, dass** das Gewichtsverhältnis der Komponente(n) a) zu dem der Komponente(n) b) bei 99,99 Gew.-% zu 0,01 Gew.-%, insbesondere (20 bis 99 Gew.-%) zu (80 bis 1 Gew.-%), jeweils bezogen auf das Gesamtgewicht aller Komponenten (insbesondere a) und b)), liegt.

**8.** Verwendung nach einem der Ansprüche 1 bis 7, **dadurch gekennzeichnet, dass** dem Injektions-Kunstmörtel, insbesondere Komponente (a) und gegebenenfalls Komponente (b), ein oder mehrere weitere Zusätze ausgewählt aus

(1) Haftvermittlern, Rheologieadditivenmitteln, Pigmenten, Farbstoffen, Hilfsstoffen, Lösemitteln, Stabilisatoren, Verdickungsmitteln, Weichmachern, beispielsweise in einer Menge von insgesamt bis zu 80, vorzugsweise zwischen 0,01 und 50 Gew.-%, vorliegen, bezogen auf das Gesamtgewicht aller Komponenten ;
(2) weiteren Silanen mit hydrolysierbaren Gruppen, insbesondere Alkoxysilanverbindungen oder Silan-Vernetzern, sonstigen Aminosilanen, vorzugsweise in einem Anteil von bis zu 80 Gew.-%, bezogen auf das Gesamtgewicht aller Silane,

(3) Katalysatoren, welche die Hydrolyse der hydrolysierbaren an Si-gebundenen Gruppen bei der Härtung beschleunigen, wobei die Gesamtmenge an Katalysator, bezogen auf das komplette Kunstharz, vorzugsweise bei 0,0001 bis 5 Gew.-% liegen kann, z.B. bei 0,0005 bis 0,5 Gew.-%, bezogen auf das Gesamtgewicht aller Komponenten;
(4) Füllstoffen vorzugsweise in einer Menge von bis zu 90, insbesondere 3 bis 85, beispielsweise 5 bis 70 Gew.-% vor, bezogen auf das Gesamtgewicht der Komponenten des Kunstharzes, und
(5) gegebenenfalls weiteren Zusätzen in einem Anteil von bis zu 10 Gew.-%, bezogen auf das Gesamtgewicht aller Komponenten,

zugesetzt sein können,
mit der Maßgabe, dass die Komponente(n) a) frei ist oder sind von Zusätzen, welche zu einer Reaktion der Si-gebundenen hydrolysierbaren Gruppen in Komponente a) bereits beim Lagern führen.

9. Verfahren zur Befestigung von Verankerungselementen in Löchern, **dadurch gekennzeichnet, dass** es eine Verwendung nach einem der Ansprüche 1 bis 8 beinhaltet.

## Claims

1. Use of an injectable synthetic mortar for fixing anchoring elements in holes, wherein the injectable synthetic mortar comprises at least one component a) alone based on at least one silane-terminated synthetic resin that includes at least one Si-bonded hydrolysable group and is introduced into a hole or, in the case of a multicomponent injectable synthetic mortar, additionally comprises at least one component b) having a water-based hardener, wherein in the case of a multicomponent injectable synthetic mortar the components are mixed together at the site of use and introduced simultaneously and/or subsequently into a hole; and simultaneously or subsequently an anchoring element is introduced into the hole, the injectable synthetic mortar having been deaerated so as to be free of finely distributed gases in such a way that the volume of gases dissolved therein is less than 0.5 % by volume at room temperature and normal pressure; and the silane-terminated synthetic resins that include at least one Si-bonded hydrolysable group which are present in the at least one component a) are those obtainable

(i) by reaction of organic polyamines with silanes that include one or more epoxy and/or isocyanate and/or (meth)acrylic and/or anhydrido groups and include at least one Si-bonded hydrolysable group;
(ii) by reaction of mono-functional or higher functional hydroxy-group-containing resins or polyols with silanes that include one or more epoxy and/or isocyanate and/or anhydrido groups and include at least one Si-bonded hydrolysable group;
(iii) by reaction of vinyl-group-containing resins with silanes that include one or more amino and/or thiol groups and include at least one Si-bonded hydrolysable group;
(iv) by reaction of anhydride-group-containing compounds with silanes that include one or more amino groups or isocyanato groups and at least one Si-bonded hydrolysable group;
(v) by reaction of resins that carry isocyanate radicals, at least some of which radicals, as a result of reaction with one another, are present in the form of biuret, allophanate, uretdione, isocyanurate, iminooxadiazinedione and/or uretonimine groups, with silanes having as substituents at least one Si-bonded hydrolysable group and at least one group that is reactive towards isocyanate groups selected from amino, sec.-amino, mercapto, epoxy, isocyanato and/or anhydrido group(s), especially an amino group;
(vi) or by use of the products of two or more of the afore-mentioned reactions.

2. Use according to claim 1, wherein Si-bonded hydrolysable groups are to be understood as being especially those groups L which are a constituent of a group of the formula Z

$$-Si(R^B)_{3-t}(L)_t \qquad (Z),$$

wherein the radical(s) $R^B$ can denote, independently of one another, an alkyl, arylalkyl or aryl group, preferably alkyl,
t denotes an integer from 1 to 3, and
L denotes a Si-bonded hydrolysable group, especially alkoxy.

3. Use according to either one of claims 1 and 2, **characterised in that**
for the reaction (i) by reaction of organic polyamines with silanes that include epoxy and/or isocyanate and/or

(meth)acrylic and/or anhydrido groups and include at least one Si-bonded hydrolysable group there is carried out a reaction of an aliphatic, araliphatic or aromatic polyamine or of a mixture of two or more such compounds or of hydrazine with silanes that include epoxy and/or isocyanate and/or (meth)acrylic and/or anhydrido group(s) and include at least one Si-bonded hydrolysable group and have the formula II

$$[Y\text{-}(CH_2)_a\text{-}]\text{-}Si(R^B)_{3-t}(L)_t \qquad (II),$$

wherein

Y denotes isocyanato (-N=C=O), epoxyalkoxy, methacryloyloxy and/or (further) an anhydrido group;
$R^B$ can denote, independently of any other, an alkyl, arylalkyl or aryl group, preferably alkyl,
L denotes a hydrolysable radical, especially alkoxy,
a denotes a positive integer, especially from 1 to 10, more especially from 1 to 3; and
t denotes from 1 to 3;

for the reaction (ii) by reaction of mono-functional or higher functional hydroxy-group-containing resins or polyols with silanes that include epoxy and/or isocyanate and/or anhydride groups and include at least one Si-bonded hydrolysable group there is carried out the reaction between hydroxy-group-containing resins or polyols, especially polyester resins, polyester polyols and/or polyether polyols, with silanes that include epoxy and/or isocyanate and/or anhydrido groups and include at least one Si-bonded hydrolysable group, as just defined under (i);
for the reaction (iii) by reaction of vinyl-group-containing resins with silanes that include amino or thiol groups and include at least one Si-bonded hydrolysable group there is carried out the reaction of epoxy(meth)acrylates, unsaturated polyester resins, vinyl ester resins, urethane(meth)acrylates, hydroxyalkyl(meth)acrylates, alkyl-, cycloalkyl-, aryl-mono-, di-, tri-, tetra-, penta- or hexa-ol-(meth)acrylates and/or (poly)(meth)acrylates with one or more silanes that include amino and/or thiol groups and include at least one Si-bonded hydrolysable group, preferably of the formula I

$$[R_1\text{-}X\text{-}(CH_2)_n\text{-}]_p\text{-}Si(R^B)_q(L)_t \qquad (I),$$

wherein

X denotes S (preferred) or NH (preferred) or O or NCO or nothing; with X being nothing (= absent) when $R_1$ denotes anhydrido;
$R_1$ denotes nothing, hydrogen, cycloalkyl, alkyl, aminoalkyl, epoxyalkyl, (meth)acryloyl, aryl, acyl, heterocyclyl (especially anhydrido) or a radical of the formula $-[(CH_2)_{n^*}]_{p^*}\text{-}Si(R^{B*})_{3-t^*}(L^*)_{t^*}$, wherein, in each case independently of other radicals, $R^{B*}$ is as defined below for $R^B$, L* is as defined below for L and n*, p* and t* are in each case as defined below; with $R_1$ being hydrogen when X denotes S; with X being O when $R_1$ is epoxyalkyl or methacryloyl; with $R_1$ being nothing when X denotes NCO (= isocyanato);
$R^B$, independently of any other, denotes an alkyl, arylalkyl or aryl group, preferably alkyl,
L denotes a hydrolysable radical, especially alkoxy,
n and, if present, n* independently of one another denote a positive integer, especially from 1 to 10;
p and, if present, p* independently of one another denote from 1 to 3;
q and, if present, q* independently of one another denote from 0 to 2; and
t and, if present, t* independently of one another denote from 1 to 3,

with the proviso that p + q + t = 4 and, if present, p* + q* + t* = 4;
for the reaction (iv) by reaction of anhydride-group-containing compounds with silanes that include amino groups or isocyanate groups and at least one Si-bonded hydrolysable group there is carried out the reaction of carboxylic anhydrides of carboxylic acids containing two or more carboxyl radicals with one or more silanes of formula I mentioned under process (iii) that include one or more amino groups and include at least one Si-bonded hydrolysable group;
and/or
for the reaction (v) by reaction of resins that carry isocyanate radicals, at least some of which radicals, as a result of reaction with one another, are present in the form of biuret, allophanate, uretdione, isocyanurate, iminooxadiazinedione and/or uretonimine groups, with silanes having as substituents at least one Si-bonded hydrolysable group and at least one group that is reactive towards isocyanate groups selected from amino, sec.-amino, mercapto, epoxy, isocyanato and anhydrido, especially an amino group, there is carried out the reaction of one or more resins carrying isocyanate radicals, selected from those of formula A

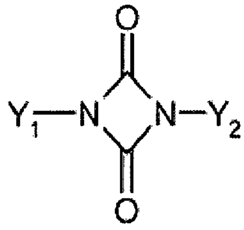

(A)

wherein $Y_1$ and $Y_2$ can be selected each independently of the other from alkyl, aryl or alkylaryl, wherein at least one or all of those radicals are substituted by at least one free isocyanate group, and wherein some of the isocyanate groups can again be a constituent of corresponding uretdione-type structures or further structures which may also be formed by secondary reactions;
of formula B

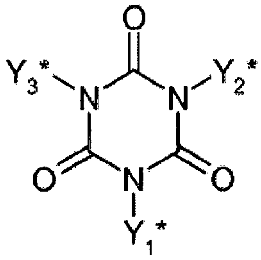

(B)

wherein $Y_1$*, $Y_2$* and $Y_3$* can be selected each independently of the others from alkyl, aryl or alkylaryl, wherein at least one or preferably two or all of those radicals are substituted by at least one free isocyanate group, wherein isocyanate groups can again be a constituent of corresponding isocyanurate-type structures or further structures which may also be formed by secondary reactions, so that in total at least one or preferably two or three, or more, free isocyanate groups remain per molecule of formula B;
of formula C

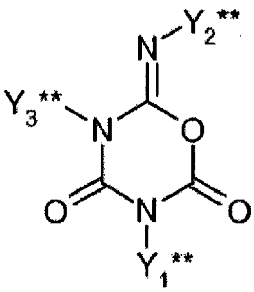

(C)

wherein $Y_1$**, $Y_2$** and $Y_3$** can be selected each independently of the others from alkyl, aryl or alkylaryl, wherein at least one or preferably two or all of those radicals are substituted by at least one free isocyanate group, wherein isocyanate groups can again be a constituent of corresponding iminooxadiazinedione-type structures or further structures which may also be formed by secondary reactions, so that in total at least one or preferably two or three, or more, free isocyanate groups remain per molecule of formula C;
of formula D

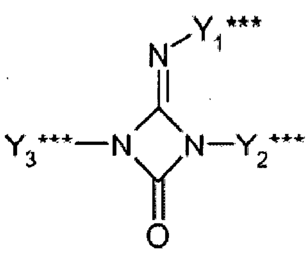

(D)

wherein $Y_1$***, $Y_2$*** and $Y_3$*** can be selected each independently of the others from alkyl, aryl or alkylaryl, wherein at least one or preferably two or all of those radicals are substituted by at least one free isocyanate group, wherein isocyanate groups can again be a constituent of corresponding isocyanurate-type structures or further structures which may also be formed by secondary reactions, so that in total at least one or preferably two or three, or more, free isocyanate groups remain per molecule of formula D;
of formula E

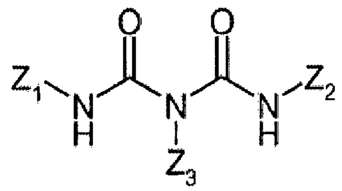

(E)

wherein $Z_1$, $Z_2$ and $Z_3$ can be selected each independently of the others from alkyl, aryl or alkylaryl, wherein at least one or preferably two or all of those radicals are substituted by at least one isocyanate group, wherein isocyanate groups can again be a constituent of corresponding biuret-type structures or further structures which may also be formed by secondary reactions, so that in total at least one or preferably two or three, or more, free isocyanate groups remain per molecule of formula E;
and of formula F

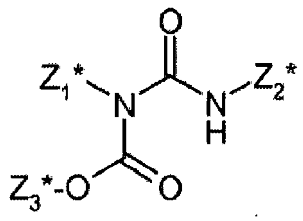

(F)

wherein $Z_1$*, $Z_2$* and $Z_3$* can be selected each independently of the others from alkyl, aryl or alkylaryl, wherein at least one or preferably two of those radicals are substituted by an isocyanate group, wherein isocyanate groups can again be a constituent of corresponding allophanate-type structures or further structures which may also be formed by secondary reactions, so that in total at least one or preferably two or three, or more, free isocyanate groups remain per molecule of formula F;
and at least one silane of formula I as defined above for reaction (iii).

**4.** Use according to any one of claims 1 to 3, **characterised in that** the injectable synthetic mortar is a multi-component synthetic mortar, especially a two-component synthetic mortar having one of each of components a) and b).

**5.** Use according to any one of claims 1 to 3, **characterised in that** the injectable synthetic mortar is a single-component synthetic mortar having one of components a).

**6.** Use according to claim 4, **characterised in that** the at least one component b) includes as water-based hardener water or a water-containing composition in gel or paste form, wherein the water-containing composition in gel or paste form includes water and, in addition, one or more thickeners, especially water-soluble and/or water-swellable polymers or inorganic thickeners, and/or especially water glass.

**7.** Use according to either one of claims 4 and 6, **characterised in that** the ratio by weight of component(s) a) to that of component(s) b) is 99.99 % by weight to 0.01 % by weight, especially (20 to 99 % by weight) to (80 to 1 % by weight), in each case based on the total weight of all components (especially a) and b)).

**8.** Use according to any one of claims 1 to 7, **characterised in that** there can be added to the injectable synthetic mortar, especially to component (a) and, where applicable, to component (b), one or more further additives selected from

(1) adhesion promoters, rheology additive agents, pigments, dyes, adjuvants, solvents, stabilisers, thickeners,

plasticisers, for example in an amount of in total up to 80 % by weight, preferably between 0.01 and 50 % by weight, based on the total weight of all components;
(2) further silanes having hydrolysable groups, especially alkoxysilane compounds or silane crosslinkers, other aminosilanes, preferably in a proportion of up to 80 % by weight, based on the total weight of all silanes;
(3) catalysts which accelerate the hydrolysis of the hydrolysable Si-bonded groups during hardening, wherein the total amount of catalyst, based on the complete synthetic resin, can be preferably from 0.0001 to 5 % by weight, for example from 0.0005 to 0.5 % by weight, based on the total weight of all components;
(4) fillers preferably in an amount of up to 90 % by weight, especially from 3 to 85 % by weight, for example from 5 to 70 % by weight, based on the total weight of the components of the synthetic resin, and
(5) optionally further additives in a proportion of up to 10 % by weight, based on the total weight of all components,

with the proviso that component(s) a) is or are free of additives that lead to a reaction of the Si-bonded hydrolysable groups in component a) as early as during storage.

**9.** Method of fixing anchoring elements in holes, **characterised in that** it includes a use according to any one of claims 1 to 8.

**Revendications**

**1.** Utilisation d'un mortier synthétique d'injection pour fixation d'éléments d'ancrage dans des trous, pour laquelle le mortier synthétique d'injection comprend au moins un composant a) à base d'au moins une résine synthétique à terminaison silane, contenant au moins un groupe hydrolysable lié à Si, et est introduit dans un trou, ou, dans le cas d'un mortier synthétique d'injection à plusieurs composants, comprend en outre au moins un composant b) avec un durcisseur à base aqueuse, les composants, dans le cas d'un mortier synthétique d'injection à plusieurs composants, étant mélangés sur le site d'utilisation, et simultanément et/ou ensuite étant introduits dans un trou ; et, simultanément ou ensuite, un élément d'ancrage étant inséré dans le trou, le mortier synthétique d'injection étant dégazé pour être débarrassé des gaz finement divisés, de telle sorte que le volume des gaz qui y sont dissous soit, à la température ambiante et sous la pression normale, inférieur à 0,5 % en volume, et que, pour ce qui concerne les résines synthétiques à terminaison silane, présents dans le ou les composants a), contenant au moins un groupe hydrolysable lié à Si, il s'agit de ceux que l'on peut obtenir

(i) par réaction de polyamines organiques avec des silanes contenant un ou plusieurs groupes époxy et/ou isocyanate et/ou (méth)acryliques et/ou anhydrido et contenant au moins un groupe hydrolysable lié à Si ;
(ii) par réaction de résines à un groupement hydroxy monofonctionnels ou à fonctionnalité plus élevée, ou de polyols, avec des silanes contenant un ou plusieurs groupes époxy et/ou isocyanate et/ou anhydrido et au moins un groupe hydrolysable lié à Si ;
(iii) par réaction de résines contenant des groupes vinyle avec des silanes contenant un ou plusieurs groupes amino et/ou thiol et au moins un groupe hydrolysable lié à Si ;
(iv) par réaction de composés contenant des groupes anhydride avec des silanes contenant un ou plusieurs groupes amino ou groupes isocyanato et au moins un groupe hydrolysable lié à Si ;
(v) par réaction de résines portant des résidus isocyanate présents au moins partiellement sous l'effet d'une réaction les unes avec les autres sous forme des groupes biuret, allophanate, uretdione, isocyanurate, iminooxadiazinodione et/ou urétonimine, avec des silanes qui en tant que substituants comprennent au moins un groupe hydrolysable lié à Si et au moins un groupe réactif vis-à-vis des isocyanates choisi parmi les groupes amino, sec-amino, mercapto, époxy, isocyanato et/ou anhydrido, en particulier un groupe amino ;
(vi) ou par utilisation des produits de deux ou plus des réactions ci-dessus.

**2.** Utilisation selon la revendication 1, pour laquelle il convient d'entendre par groupes hydrolysables liés à Si en particulier les groupes L qui sont une partie constituante d'un groupe de formule Z

$$-Si(R^B)_{3-t}(L)_t \qquad (Z)$$

dans laquelle le ou les radicaux $R^B$ peuvent représenter chacun indépendamment des autres un groupe alkyle, arylalkyle ou aryle, de préférence alkyle,
t représente un nombre entier de 1 à 3, et
L représente un groupe hydrolysable lié à Si, en particulier alcoxy.

**3.** Utilisation selon l'une des revendications 1 ou 2, **caractérisée en ce qu'**on met en oeuvre pour la réaction (i), par réaction de polyamines organiques avec des silanes contenant des groupes époxy et/ou isocyanate et/ou (méth)acrylique et/ou anhydrido et contenant au moins un groupe hydrolysable lié à Si, une réaction d'une polyamine aliphatique, araliphatique ou aromatique ou d'un mélange de deux ou plus composés de ce type, ou d'hydrazine, avec un silane contenant des groupes époxy et/ou isocyanate et/ou (méth)acryliques et/ou anhydrido et contenant au moins d'au moins un groupe hydrolysable lié à Si, de formule de formule II

$$[Y-(CH_2)_a-]-Si(R^B)_{3-t}(L)t \qquad (II)$$

dans laquelle

Y représente un groupe isocyanato (-N=C=O), époxyalcoxy, méthacryloyloxy et/ou (en outre) un groupe anhydrido ;
les radicaux $R^B$ peuvent représenter indépendamment les uns des autres chacun un groupe alkyle, arylalkyle ou aryle, de préférence alkyle,
L représente un radical hydrolysable, en particulier alcoxy,
a représente un nombre entier positif, en particulier 1 à 10, surtout 1 à 3 ; et
t représente 1 à 3 ;

pour la réaction (ii) par réaction de résines hydroxy monofonctionnels ou à fonctionnalité plus élevée, ou de polyols, avec des silanes contenant des groupes époxy et/ou isocyanate et/ou anhydride et contenant au moins un groupe hydrolysable lié à Si, la réaction entre des résines ou polyols contenant des groupes hydroxy, en particulier des résines de polyester, des polyesterpolyols et/ou des polyétherpolyols avec des silanes contenant des groupes époxy et/ou isocyanate et/ou anhydrido et contenant au moins un groupe hydrolysable lié à Si, tels que définis juste ci-dessus en (i) ;
pour la réaction (iii) par réaction de résines contenant des groupes vinyle avec des silanes contenant des groupes amino ou thiol et contenant au moins un groupe hydrolysable lié à Si, la réaction d'époxy(méth)acrylates, de résines de polyester insaturé, de résines d'ester vinylique, de (méth) acrylates d'uréthanne, de (méth)acrylates d'hydroxyalkyle, de mono-, di-, tri-, tétra-, penta- ou hexa-ol-(méth)acrylates d'alkyle, de cycloalkyle ou d'aryle et/ou de (poly)(méth)acrylates, avec des silanes contenant un ou plusieurs groupes amino et/ou thiol et contenant au moins un groupe hydrolysable lié à Si, de préférence de formule I,

$$[R_1-X-(CH_2)_n-]_p-Si-(R^B)_q(L)_t \qquad (I)$$

dans laquelle

X représente S (préféré) ou NH (préféré) ou O ou NCO, ou rien ; X n'étant rien (= manque) quand $R_1$ représente le groupe anhydrido ;
$R_1$ représente rien, un atome d'hydrogène, un groupe cycloalkyle, alkyle, aminoalkyle, époxyalkyle, (méth)acryloyle, aryle, acyle, hétérocyclyle (en particulier anhydrido), ou un radical de formule $-[(CH_2)_{n^*}]_{p^*}-Si(R^{B^*})_{3-t^*}(L^*)_{t^*}$ *, dans laquelle, dans chaque cas indépendamment d'un autre radical, $R^{B^*}$ a les significations données ci-après pour $R^B$, L* a les significations données ci-après pour L, et n*, p* et t* ont chacun les significations données ci-après ;
où $R_1$ est un atome d'hydrogène quand X représente S ; X représente O quand $R_1$ est un groupe époxyalkyle ou méthacryloyle ; $R_1$ n'est rien quand X représente NCO (= isocyanato) ;
les radicaux $R^B$ peuvent représenter chacun indépendamment des autres un groupe alkyle, arylalkyle ou aryle, de préférence alkyle,
L représente un radical hydrolysable, en particulier alcoxy,
n et, s'il est présent, n*, représentent chacun indépendamment de l'autre un nombre entier positif, en particulier de 1 à 10 ;
p, et, s'il est présent, p*, représentent chacun indépendamment de l'autre 1 à 3 ;
q, et, s'il est présent, q*, représentent chacun indépendamment de l'autre 0 à 2 ; et
t, et, s'il est présent, t*, représentent chacun 1 à 3, à la condition que l'on ait p + q + t = 4 et, s'ils sont présents, p* + q* + t* = 4 ;

pour la réaction (iv) par réaction de composés contenant des groupes anhydride avec des groupes amino ou des groupes isocyanato et des silanes contenant au moins un groupe hydrolysable lié à Si, la réaction d'anhydrides carboxyliques d'acides carboxyliques contenant deux ou plus radicaux carboxyle, avec des silanes de formule I,

contenant un ou plusieurs groupes amino, un ou plusieurs mentionnés sous le procédé (iii), et contenant au moins un groupe hydrolysable lié à Si ;
et/ou
pour la réaction (v) par réaction de résines portant des résidus isocyanate au moins partiellement présents par réaction les uns avec les autres sous forme de groupes biuret, allophanate, uret-dione, isocyanurate, iminooxadiazinedione et/ou urétonimine, avec des silanes qui en tant que substituants comprennent au moins un groupe hydrolysable lié à Si et au moins un groupe réactif vis-à-vis des groupes isocyanate, choisis parmi parmi les groupes amino, sec-amino, mercapto, époxy, isocyanato et anhydrido, en particulier un groupe amino, la réaction de résines portant un ou plusieurs résidus isocyanate, choisis parmi ceux de formules A

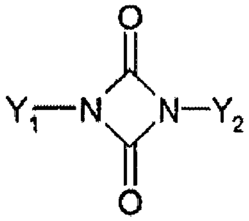

(A)

dans laquelle $Y_1$ et $Y_2$ peuvent, indépendamment l'un de l'autre, être choisis parmi les groupes alkyle, aryle ou alkylaryle, au moins l'un ou la totalité de ces résidus étant substitué par au moins un groupe isocyanate libre, et une partie des groupes isocyanate pouvant de nouveau être une partie constituante de structures correspondantes du type uret-dione, ou d'autres structures pouvant aussi se former éventuellement sous l'effet de réactions secondaires ;
de formule B

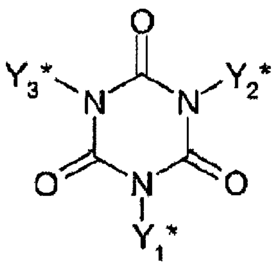

, (B)

dans laquelle $Y_1$*, $Y_2$* et $Y_3$* peuvent chacun indépendamment des autres être choisis parmi les groupes alkyle, aryle ou alkylaryle, au moins l'un ou de préférence deux ou la totalité de ces résidus étant substitués par au moins un groupe isocyanate libre, les groupes isocyanate pouvant de nouveau être une partie constituante de structures correspondantes du type isocyanurate et d'autres structures se formant éventuellement aussi sous l'effet de réactions secondaires, de sorte que globalement il reste par molécule de formule B au moins un, ou de préférence deux ou trois, ou plus, groupes isocyanate libres ;
de formule C

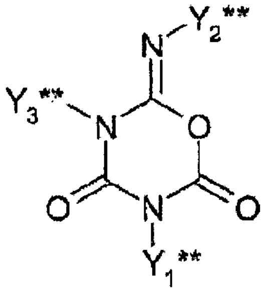

(C)

dans laquelle $Y_1$**, $Y_2$** et $Y_3$** peuvent indépendamment les uns des autres être choisis parmi les groupes alkyle, aryle ou alkylaryle, au moins l'un ou de préférence deux, ou la totalité de ces radicaux, étant substitués par au moins un groupe isocyanate libre, les groupes isocyanate pouvant de nouveau être une partie constituante de structures

correspondantes, du type iminooxadiazinedione, ou d'autres structures se formant éventuellement aussi sous l'effet de réactions secondaires, de sorte que globalement il reste par molécule de formule C au moins un ou de préférence deux ou trois, ou plus, groupes isocyanate libres ;
de formule D

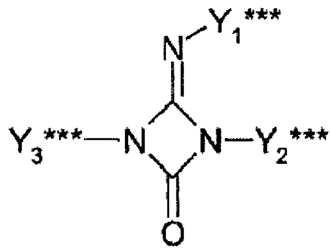

, (D)

dans laquelle $Y_1$***, $Y_2$*** et $Y_3$*** peuvent indépendamment les uns des autres être choisis parmi les groupes alkyle, aryle ou alkylaryle, au moins l'un ou de préférence deux ou la totalité de ces radicaux étant substitués par au moins un groupe isocyanate libre, les groupes isocyanate pouvant être de nouveau une partie constituante de structures correspondantes de type isocyanurate et d'autres structures éventuellement aussi formées sous l'effet de réactions secondaires, de sorte que globalement il reste par molécule de formule D au moins un ou de préférence deux ou trois, ou plus, groupes isocyanate libres ;
de formule E

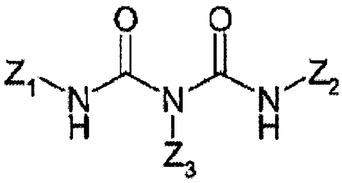

(E)

dans laquelle $Z_1$, $Z_2$ et $Z_3$ peuvent indépendamment les uns des autres être choisis parmi les groupes alkyle, aryle ou alkylaryle, au moins l'un ou de préférence deux ou la totalité de ces radicaux étant substitués par au moins un groupe isocyanate, les groupes isocyanate pouvant de nouveau être une partie constituante de structures correspondantes de type biuret ou d'autres structures éventuellement aussi formées sous l'effet de réactions secondaires, de sorte que globalement il reste par molécule de formule E au moins un, ou de préférence deux ou trois, ou plus, groupes isocyanate libres ;
et de formule F

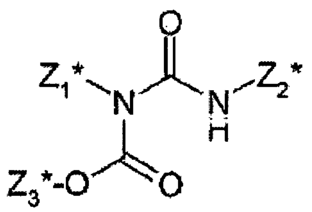

(F)

dans laquelle $Z_1$*, $Z_2$* et $Z_3$* peuvent indépendamment les uns des autres être choisis parmi les groupes alkyle, aryle ou alkylaryle, au moins l'un ou de préférence deux de ces radicaux étant substitués par un groupe isocyanate ou, les groupes isocyanate pouvant de nouveau être une partie constituante de structures correspondantes de type allophanate, ou d'autres structures éventuellement aussi formées sous l'effet de réactions secondaires, de sorte que globalement il reste par molécule de formule F au moins un ou de préférence deux ou trois, ou plus, groupes isocyanate libres ;
et d'au moins un silane de formule I, tel que défini ci-dessus pour la réaction (iii).

4. Utilisation selon l'une des revendications 1 à 3, **caractérisée en ce que**, pour ce qui concerne le mortier synthétique d'injection, il s'agit d'un mortier synthétique à plusieurs composants, en particulier d'un mortier synthétique bicomposant avec respectivement l'une des composants a) et b).

5. Utilisation selon l'une des revendications 1 à 3, **caractérisée en ce que**, pour ce qui concerne le mortier synthétique d'injection, il s'agit d'un mortier synthétique monocomposant ayant l'un des composants a).

6. Utilisation selon la revendication 4, **caractérisée en ce que** le ou les composants b) contiennent en tant que durcisseur à base d'eau de l'eau ou une masse contenant de l'eau sous forme gel ou pâte, la masse contenant de l'eau sous forme gel ou pâte contenant de l'eau et en outre un ou plusieurs épaississants, en particulier des polymères solubles dans l'eau et/ou pouvant gonfler dans l'eau ou des épaississants inorganiques, et/ou en particulier du verre soluble.

7. Utilisation selon l'une des revendications 4 ou 6, **caractérisée en ce que** le rapport en poids du ou des composants a) au ou aux composants b) est de 99,99 % en poids à 0,01 % en poids, en particulier de (20 à 99 % en poids) à (80 à 1 % en poids), dans chaque cas par rapport au poids total de l'ensemble des composants (en particulier a) et b)).

8. Utilisation selon l'une des revendications 1 à 7, **caractérisée en ce qu'**on peut ajouter au mortier synthétique d'injection, en particulier au composant (a) et éventuellement au composant (b), un ou plusieurs additifs choisis parmi

   (1) les promoteurs d'adhérence, les additifs rhéologiques, les pigments, les matières colorantes, les adjuvants, les solvants, les stabilisants, les épaississants, les plastifiants, par exemple en une quantité totale allant jusqu'à 80, de préférence comprise entre 0,01 et 50 % en poids, par rapport au poids total de l'ensemble des composants ;
   (2) des silanes supplémentaires comprenant des groupes hydrolysables, en particulier des composés alcoxysilanes ou des agents de réticulation de type silane, d'autres aminosilanes, de préférence selon une proportion allant jusqu'à 80 % en poids par rapport au poids total de l'ensemble des silanes,
   (3) les catalyseurs qui accélèrent lors du durcissement l'hydrolyse des groupes hydrolysables liés à Si, la quantité totale de catalyseur, par rapport à la résine synthétique complète, pouvant de préférence être de 0,0001 à 5 % en poids, par exemple de 0,0005 à 0,5 % en poids par rapport au poids total de tous les composants ;
   (4) des matières de charge, de préférence en une quantité allant jusqu'à 90, en particulier de 3 à 85, par exemple de 5 à 70 % en poids par rapport au poids total des composants de la résine synthétique, et
   (5) éventuellement des additifs supplémentaires selon une proportion allant jusqu'à 10 % en poids par rapport au poids total de tous les composants,

   à la condition que le ou les composants a) soient exempts d'additifs qui déjà lors du stockage conduisent à une réaction des groupes hydrolysables liés à Si dans le composant a).

9. Procédé pour fixer des éléments d'ancrage dans des trous, **caractérisé en ce qu'**il comprend une utilisation selon l'une des revendications 1 à 8.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2003155 A
- DE 3636974
- DE 102006054471 A1
- EP 0000194 A
- EP 0531820 A
- DE 2616416
- EP 0010589 A
- US 3124605 A
- US 3358010 A
- US 3644490 A
- US 3769318 A
- US 4160080 A
- US 4177342 A
- US 5124427 A
- US 5208334 A
- US 5235018 A


### In der Beschreibung aufgeführte Nicht-Patentliteratur


- **SIGGIA, S. ; J. G. HANNA.** *Anal. Chem.,* 1948, vol. 20, 1084